(19) Europäisches Patentamt
European Patent Office
Office européen des brevets

(11) EP 3 916 436 A1

(12) **EUROPEAN PATENT APPLICATION**
published in accordance with Art. 153(4) EPC

(43) Date of publication:
01.12.2021 Bulletin 2021/48

(51) Int Cl.:
G02B 5/02 (2006.01)     G02B 3/00 (2006.01)
G02B 27/01 (2006.01)     G02B 27/48 (2006.01)
G03B 21/62 (2014.01)

(21) Application number: 20744619.6

(22) Date of filing: 21.01.2020

(86) International application number:
PCT/JP2020/001825

(87) International publication number:
WO 2020/153319 (30.07.2020 Gazette 2020/31)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 25.01.2019 JP 2019011212

(71) Applicant: Kuraray Co., Ltd.
Kurashiki-shi, Okayama 710-0801 (JP)

(72) Inventors:
• IKEDA, Keisuke
Kamisu-shi, Ibaraki 314-0197 (JP)
• UCHIDA, Atsushi
Kamisu-shi, Ibaraki 314-0197 (JP)
• KARAI, Masaru
Kamisu-shi, Ibaraki 314-0197 (JP)

(74) Representative: Müller-Boré & Partner
Patentanwälte PartG mbB
Friedenheimer Brücke 21
80639 München (DE)

(54) **DIFFUSION PLATE**

(57)     Provided is a diffuser plate that makes it possible to further mitigate unevenness of luminance or unevenness of color while suppressing speckle noise of transmitted light or reflected light.

A transmission-type or reflection-type diffuser plate (100) including a planar base material (51) on which an optical element having an effective diameter of "a" in an X-axis direction and an effective diameter of "b" in a Y-axis direction is provided to constitute an axb two-dimensional basic periodic structure (10), each of the basic periodic structure having an NaxMb two-dimensional periodic phase structure in which a basic block has N rows and M columns including N optical elements (53) in the X-axis direction and M optical elements in the Y-axis direction, the diffuser plate being configured such that if a phase structure $P_{nm}$ in the n-th row and the m-th column is expressed by $P_{n1} + P_{1m}$, and directivity is represented by square of the absolute value of Fourier transform of complex transmittance or complex reflectance of an optical element in the n-th row and the m-th column in the basic block; a ratio of standard deviation to average of the directivity is 0.3 or less.

Fig. 1

## Description

### Technical Field

The present invention relates to a diffuser plate.

### Background Art

There have been proposed techniques for applying, as a screen, a diffuser plate that uses a microlens array to a head-up display, a laser projector, etc. Advantages that can be obtained by use of a microlens array may include suppression of speckle noise as compared to a case where a diffuser plate such as an opaque plate or opaque glass is used.

For example, Patent Literature 1 proposes an image forming apparatus which includes a laser projector that uses laser light as a light source and is adapted to project an image formed by an array of a plurality of pixels, and a diffuser plate that uses a microlens array in which a plurality of microlenses are arranged. If a microlens array is used, incident light can be appropriately diffused, and a necessary diffusion angle can be freely designed.

Patent Literature 2 proposes a method for mitigating unevenness of luminance or unevenness of color due to the diffracted light caused by periodicity of the microstructure through random distribution of at least one of the parameters defining the shape or position of the microstructure of a microlens and the like in accordance with a predetermined probability density function.

Patent Literatures 3 and 4 propose methods for making it possible to create new diffracted light in the gap between traditional diffracted light by imparting, to the microlens array, a second periodic structure that has the functionality of creating an optical path length difference for the light transmitted through the individual microlenses, and thereby mitigate the unevenness of luminance or unevenness of color.

### Citation List

### Patent Literature

Patent Literature 1: Japanese Unexamined Patent Application Publication No. 2010-145745
Patent Literature 2: Published Japanese Translation of PCT International Publication for Patent Application, No. 2004-505306
Patent Literature 3: International Patent Publication No. 2016/139769
Patent Literature 4: Japanese Unexamined Patent Application Publication No. 2017-122773

### Summary of Invention

### Technical Problem

When a typical microlens array is used, unevenness of luminance occurs due to diffraction spots caused by the periodicity of the microlens array. Patent Literature 2 describes that unevenness of luminance can be mitigated by causing at least one of the parameters defining the shape or position of the lens to be randomly distributed in accordance with a predetermined probability density function. However, if randomness is imparted to the shape and/or position of the lens as in Patent Literature 2, a problem arises that speckle noise is likely to occur and the image quality is deteriorated because a random phase difference occurs in the light transmitted through the lens array. Moreover, while the random distribution mitigates the unevenness of luminance as an overall average of the microlens array, another problem arises that a portion left unmitigated may exist locally.

Patent Literatures 3 and 4 describe that the unevenness of luminance is mitigated by imparting a second periodic structure, which has a functionality of creating an optical path length difference for the light transmitted through the individual microlenses, to the microlens array. However, according to the periodic structures defined by staggered arrangement or two vertical axes as proposed in Patent Literatures 3 and 4, since the density of diffracted light increases only several times, and differences in luminance occur among the individual diffracted light, there may be a case where unevenness of luminance cannot be sufficiently mitigated.

It is an object of the present invention to provide a diffuser plate that can further mitigate unevenness of luminance or unevenness of color while suppressing speckle noise of transmitted light or reflected light.

**Solution to Problem**

The present invention achieves the above-described object by the configuration described below.

[1] A transmission-type or reflection-type diffuser plate, including

a planar base material on which an X-axis and a Y-axis which are orthogonal to each other are defined in a plane direction, in which

an optical element having an effective diameter of "a" in an X-axis direction, and an effective diameter of "b" in a Y-axis direction is provided on one surface of the planar base material; or
a first optical element having an effective diameter of "a" in the X-axis direction is provided on one surface of the planar base material, and a second optical element having an effective diameter of "b" in the Y-axis direction is provided on the other surface of the planar base material, and an optical element having an effective diameter of "a" in the X-axis direction, and an effective diameter of "b" in the Y-axis direction is formed by combining the first optical element and the second optical element;

an $a \times b$ two-dimensional basic periodic structure is constituted by a plurality of the optical elements being disposed in the X-axis direction and the Y-axis direction at intervals respectively based on the effective diameters;
each basic periodic structure has a structure that creates an optical path length difference, respectively;
the structure that creates the optical path length difference has an $Na \times Mb$ two-dimensional periodic phase structure in which a basic block has N rows and M columns (at least one of M and N is an integer of 3 or more) including N optical elements in the X-axis direction and M optical elements in the Y-axis direction; and
the diffuser plate is configured such that
if a phase structure in the n-th row and the m-th column in the basic block is denoted by $P_{nm}$, and if a basic periodic phase difference $\Delta Px$ in the X-axis direction and a basic periodic phase difference $\Delta P_Y$ in the Y-axis direction are represented by the following expressions (1) and (2), the $P_{nm}$ is expressed as $P_{n1} + P_{1m}$; and

$$\Delta P_X = (P_{11} \quad P_{21} \quad ... \quad P_{N1}) \quad \text{Expression (1)}$$

$$\Delta P_Y = (P_{11} \quad P_{12} \quad ... \quad P_{1M}) \quad \text{Expression (2)}$$

if complex transmittance or complex reflectance of the optical element in the n-th row and the m-th column in the basic block is denoted by $g(n/\lambda, m/\lambda)$, and directivity is represented by square of the absolute value of Fourier transform $G(\sin\theta_n, \sin\theta_m)$ of complex transmittance or complex reflectance, a ratio of standard deviation to average of the directivity expressed by the following expression (3) is 0.3 or less.

$$\frac{\sqrt{\frac{1}{NM} \sum_1^M \sum_1^N (|G_{N,M}(\sin\theta_n, \sin\theta_m)|^2 - Ave)^2}}{Ave} \quad \text{Expression (3)}$$

(In the expression (3), Ave is an average value of $|G(\sin\theta_n, \sin\theta_m)|^2$ of each optical element in the basic block.)
[2] The diffuser plate according to [1], in which the ratio of the standard deviation to the average of the directivity expressed by the expression (3) is 0.1 or less.
[3] The diffuser plate according to [1], in which the ratio of the standard deviation to the average of the directivity expressed by the expression (3) is 0.
[4] The diffuser plate according to any one of [1] to [3], in which

the N and M are each independently any of 3,4, 5, 7, and 8, and when a wavelength of incident light is λ, a basic periodic phase difference ΔPx in the X-axis direction and a basic periodic phase difference $\Delta P_Y$ in the Y-axis direction are independently one of the following $\Delta P_A$.

$$\Delta P_A = \begin{pmatrix} 0 & 0 & \frac{1}{3}\lambda \end{pmatrix}$$

$$\Delta P_A = \begin{pmatrix} 0 & 0 & 0 & \frac{2}{4}\lambda \end{pmatrix}$$

$$\Delta P_A = \begin{pmatrix} 0 & \frac{1}{4}\lambda & 0 & \frac{3}{4}\lambda \end{pmatrix}$$

$$\Delta P_A = \begin{pmatrix} 0 & \frac{1}{4}\lambda & \frac{2}{4}\lambda & \frac{1}{4}\lambda \end{pmatrix}$$

$$\Delta P_A = \begin{pmatrix} 0 & \frac{1}{5}\lambda & \frac{3}{5}\lambda & \frac{1}{5}\lambda & 0 \end{pmatrix}$$

$$\Delta P_A = \begin{pmatrix} 0 & \frac{2}{5}\lambda & \frac{1}{5}\lambda & \frac{2}{5}\lambda & 0 \end{pmatrix}$$

$$\Delta P_A = \begin{pmatrix} 0 & \frac{1}{5}\lambda & 0 & \frac{2}{5}\lambda & \frac{2}{5}\lambda \end{pmatrix}$$

$$\Delta P_A = \begin{pmatrix} 0 & \frac{1}{5}\lambda & \frac{1}{5}\lambda & 0 & \frac{3}{5}\lambda \end{pmatrix}$$

$$\Delta P_A = \begin{pmatrix} 0 & \frac{1}{5}\lambda & \frac{4}{5}\lambda & \frac{4}{5}\lambda & \frac{1}{5}\lambda \end{pmatrix}$$

$$\Delta P_A = \begin{pmatrix} 0 & \frac{2}{5}\lambda & \frac{3}{5}\lambda & \frac{3}{5}\lambda & \frac{2}{5}\lambda \end{pmatrix}$$

$$\Delta P_A = \begin{pmatrix} 0 & \frac{1}{7}\lambda & \frac{3}{7}\lambda & \frac{6}{7}\lambda & \frac{3}{7}\lambda & \frac{1}{7}\lambda & 0 \end{pmatrix}$$

$$\Delta P_A = \begin{pmatrix} 0 & \frac{2}{7}\lambda & \frac{6}{7}\lambda & \frac{5}{7}\lambda & \frac{6}{7}\lambda & \frac{2}{7}\lambda & 0 \end{pmatrix}$$

$$\Delta P_A = \begin{pmatrix} 0 & \frac{3}{7}\lambda & \frac{2}{7}\lambda & \frac{4}{7}\lambda & \frac{2}{7}\lambda & \frac{3}{7}\lambda & 0 \end{pmatrix}$$

$$\Delta P_A = \begin{pmatrix} 0 & \frac{1}{7}\lambda & 0 & \frac{4}{7}\lambda & \frac{6}{7}\lambda & \frac{6}{7}\lambda & \frac{4}{7}\lambda \end{pmatrix}$$

$$\Delta P_A = \begin{pmatrix} 0 & \frac{1}{7}\lambda & \frac{1}{7}\lambda & 0 & \frac{5}{7}\lambda & \frac{2}{7}\lambda & \frac{5}{7}\lambda \end{pmatrix}$$

$$\Delta P_A = \begin{pmatrix} 0 & \frac{1}{7}\lambda & \frac{4}{7}\lambda & \frac{2}{7}\lambda & \frac{2}{7}\lambda & \frac{4}{7}\lambda & \frac{1}{7}\lambda \end{pmatrix}$$

$$\Delta P_A = \begin{pmatrix} 0 & \frac{1}{7}\lambda & \frac{5}{7}\lambda & \frac{5}{7}\lambda & \frac{1}{7}\lambda & 0 & \frac{2}{7}\lambda \end{pmatrix}$$

$$\Delta P_A = \begin{pmatrix} 0 & \frac{1}{7}\lambda & \frac{6}{7}\lambda & \frac{1}{7}\lambda & \frac{0}{7}\lambda & \frac{3}{7}\lambda & \frac{3}{7}\lambda \end{pmatrix}$$

$$\Delta P_A = \begin{pmatrix} 0 & \frac{2}{7}\lambda & \frac{1}{7}\lambda & \frac{4}{7}\lambda & \frac{4}{7}\lambda & \frac{1}{7}\lambda & \frac{2}{7}\lambda \end{pmatrix}$$

$$\Delta P_A = \begin{pmatrix} 0 & \frac{2}{7}\lambda & \frac{2}{7}\lambda & 0 & \frac{3}{7}\lambda & \frac{4}{7}\lambda & \frac{3}{7}\lambda \end{pmatrix}$$

$$\Delta P_A = \begin{pmatrix} 0 & \frac{2}{7}\lambda & \frac{3}{7}\lambda & \frac{3}{7}\lambda & \frac{2}{7}\lambda & 0 & \frac{4}{7}\lambda \end{pmatrix}$$

$$\Delta P_A = \begin{pmatrix} 0 & \frac{3}{7}\lambda & \frac{5}{7}\lambda & \frac{6}{7}\lambda & \frac{6}{7}\lambda & \frac{5}{7}\lambda & \frac{3}{7}\lambda \end{pmatrix}$$

$$\Delta P_A = \begin{pmatrix} 0 & 0 & 0 & \frac{2}{8}\lambda & \frac{4}{8}\lambda & 0 & \frac{4}{8}\lambda & \frac{2}{8}\lambda \end{pmatrix}$$

$$\Delta P_A = \begin{pmatrix} 0 & 0 & \frac{2}{8}\lambda & 0 & 0 & \frac{4}{8}\lambda & \frac{2}{8}\lambda & \frac{4}{8}\lambda \end{pmatrix}$$

$$\Delta P_A = \begin{pmatrix} 0 & \frac{1}{8}\lambda & 0 & \frac{3}{8}\lambda & \frac{4}{8}\lambda & \frac{1}{8}\lambda & \frac{4}{8}\lambda & \frac{3}{8}\lambda \end{pmatrix}$$

$$\Delta P_A = \begin{pmatrix} 0 & \frac{1}{8}\lambda & 0 & \frac{7}{8}\lambda & \frac{4}{8}\lambda & \frac{1}{8}\lambda & \frac{4}{8}\lambda & \frac{7}{8}\lambda \end{pmatrix}$$

$$\Delta P_A = \begin{pmatrix} 0 & \frac{1}{8}\lambda & \frac{2}{8}\lambda & \frac{1}{8}\lambda & 0 & \frac{5}{8}\lambda & \frac{2}{8}\lambda & \frac{5}{8}\lambda \end{pmatrix}$$

$$\Delta P_A = \left( 0 \quad \frac{1}{8}\lambda \quad \frac{2}{8}\lambda \quad \frac{5}{8}\lambda \quad 0 \quad \frac{5}{8}\lambda \quad \frac{2}{8}\lambda \quad \frac{1}{8}\lambda \right)$$

$$\Delta P_A = \left( 0 \quad \frac{1}{8}\lambda \quad \frac{4}{8}\lambda \quad \frac{3}{8}\lambda \quad \frac{4}{8}\lambda \quad \frac{1}{8}\lambda \quad 0 \quad \frac{3}{8}\lambda \right)$$

$$\Delta P_A = \left( 0 \quad \frac{1}{8}\lambda \quad \frac{4}{8}\lambda \quad \frac{7}{8}\lambda \quad \frac{4}{8}\lambda \quad \frac{1}{8}\lambda \quad 0 \quad \frac{7}{8}\lambda \right)$$

$$\Delta P_A = \left( 0 \quad \frac{1}{8}\lambda \quad \frac{6}{8}\lambda \quad \frac{1}{8}\lambda \quad 0 \quad \frac{5}{8}\lambda \quad \frac{6}{8}\lambda \quad \frac{5}{8}\lambda \right)$$

$$\Delta P_A = \left( 0 \quad \frac{1}{8}\lambda \quad \frac{6}{8}\lambda \quad \frac{5}{8}\lambda \quad 0 \quad \frac{5}{8}\lambda \quad \frac{6}{8}\lambda \quad \frac{1}{8}\lambda \right)$$

$$\Delta P_A = \left( 0 \quad \frac{2}{8}\lambda \quad 0 \quad \frac{4}{8}\lambda \quad \frac{4}{8}\lambda \quad \frac{2}{8}\lambda \quad \frac{4}{8}\lambda \quad \frac{4}{8}\lambda \right)$$

$$\Delta P_A = \left( 0 \quad \frac{2}{8}\lambda \quad \frac{2}{8}\lambda \quad \frac{2}{8}\lambda \quad 0 \quad \frac{6}{8}\lambda \quad \frac{2}{8}\lambda \quad \frac{6}{8}\lambda \right)$$

$$\Delta P_A = \left( 0 \quad \frac{2}{8}\lambda \quad \frac{2}{8}\lambda \quad \frac{6}{8}\lambda \quad 0 \quad \frac{6}{8}\lambda \quad \frac{2}{8}\lambda \quad \frac{2}{8}\lambda \right)$$

$$\Delta P_A = \left( 0 \quad \frac{2}{8}\lambda \quad \frac{4}{8}\lambda \quad \frac{4}{8}\lambda \quad \frac{4}{8}\lambda \quad \frac{2}{8}\lambda \quad 0 \quad \frac{4}{8}\lambda \right)$$

$$\Delta P_A = \left( 0 \quad \frac{3}{8}\lambda \quad 0 \quad \frac{5}{8}\lambda \quad \frac{4}{8}\lambda \quad \frac{3}{8}\lambda \quad \frac{4}{8}\lambda \quad \frac{5}{8}\lambda \right)$$

$$\Delta P_A = \left( 0 \quad \frac{3}{8}\lambda \quad \frac{2}{8}\lambda \quad \frac{3}{8}\lambda \quad 0 \quad \frac{7}{8}\lambda \quad \frac{2}{8}\lambda \quad \frac{7}{8}\lambda \right)$$

[5] The diffuser plate according to [4], in which the λ is 630 nm.
[6] The diffuser plate according to [4], in which the λ is 530 nm.
[7] The diffuser plate according to [4], in which the λ,is 580 nm.

**Advantageous Effects of Invention**

According to the present invention, it is possible to provide a diffuser plate which can mitigate unevenness of luminance or unevenness of color while suppressing speckle noise of transmitted light or reflected light.

**Brief Description of the Drawings**

Fig. 1 is a schematic front view that illustrates a diffuser plate according to a first embodiment.

Fig. 2 is a 1A-1A' sectional view in the diffuser plate of Fig. 1.

Fig. 3 is a 1B-1B' sectional view in the diffuser plate of Fig. 1.

Fig. 4 is a front view and a side view that illustrate a basic block in a diffuser plate according to a second embodiment.

Fig. 5 is a 4A-4A' sectional view in the basic block of Fig. 4.

Fig. 6 is a 4B-4B' sectional view in the basic block of Fig. 4.

Fig. 7 is a sectional view that illustrates a modified example of the diffuser plate of Fig. 1.

Fig. 8 is a perspective view that illustrates an example of a microlens which is an optical element.

Fig. 9 is a diagram that illustrates a result of diffracted light simulation of a microlens array having a 20 μm × 20 μm pitch.

Fig. 10 is a diagram that illustrates a result of diffracted light experiment of a microlens array having a 40 μm × 40 μm pitch.

Fig. 11 is a diagram that illustrates a result of diffracted light simulation of a microlens array having a 20 μm × 20 μm pitch.

Fig. 12 is a diagram that illustrates a result (comparative example) of diffracted light simulation of a microlens array having a 20 μm × 20 μm pitch.

## Description of Embodiments

Embodiments of a diffuser plate according to the present invention will be described with reference to the drawings. However, the present invention is not limited to the following embodiments. Further, in order to clarify the explanation, the following description and drawings are appropriately simplified, and scaling of each axial direction may be different. In addition, terms such as "parallel", "vertical", "orthogonal", and "identical" that specify shapes, geometric conditions, and degrees thereof as used in the present specification shall be interpreted to include a range in which similar functions can be expected, without being bound to a strict meaning.

[First embodiment]

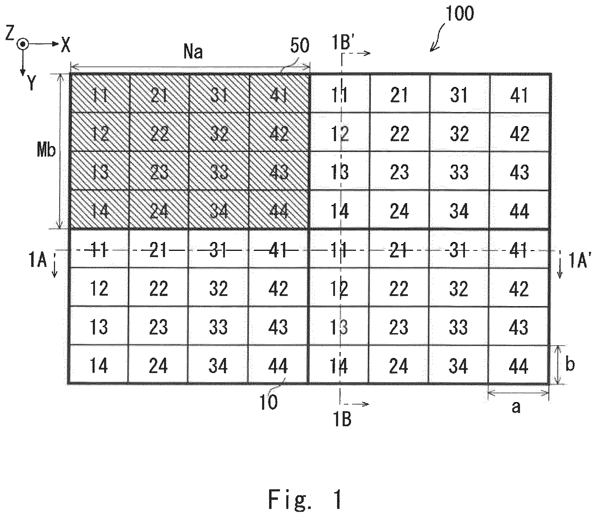

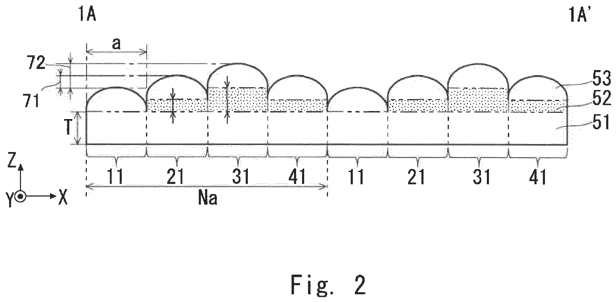

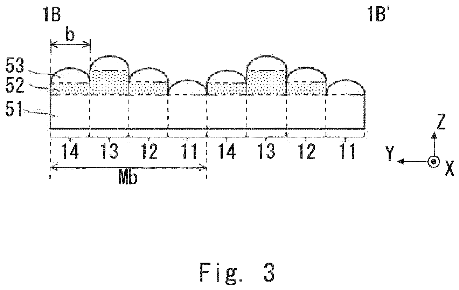

Referring to Figs. 1 to 3, a diffuser plate according to a first embodiment will be described. Fig. 1 is a schematic front view that illustrates a diffuser plate according to the first embodiment. Fig. 2 is a 1A-1A' sectional view in the diffuser plate of Fig. 1, and Fig. 3 is a 1B-1B' sectional view in the diffuser plate of Fig. 1. Note that in the examples of Figs. 1 to 3, N = M = 4.

A diffuser plate 100 of the first embodiment is a transmission-type diffuser plate, and has a plurality of optical elements 53 having an effective diameter of "a" in an X-axis direction, and an effective diameter of "b" in a Y-axis direction on one surface (+ Z side surface) of a planar base material 51.

The plurality of optical elements 53 are arranged in the X-axis direction and the Y-axis direction at intervals based on the respective effective diameters, thereby constituting an axb two-dimensional basic periodic structure 10 in which each optical element 53 is one unit.

Each of the plurality of basic periodic structures 10 has a structure that creates an optical path length difference. In the present embodiment, as an example of a structure that creates an optical path length difference, a predetermined raised portion 52 is provided between the planar base material 51 and the optical element 53. The raised portion 52 has a periodic phase structure of N optical elements (that is, Na) in the X-axis direction, and has a periodic phase structure of M optical elements (that is, Mb) in the Y-axis direction.

In the present embodiment, through a combination of the periodic phase shift structure in the X-axis direction and the periodic phase shift structure in the Y-axis direction, an NaxMb two-dimensional periodic phase structure is formed in which a basic block 50 has N rows and M columns.

Specifically, when the phase structure in the n-th row and the m-th column in the basic block 50 is denoted by $P_{nm}$, and a periodic phase difference $\Delta Px$ in the X-axis direction and a periodic phase difference $\Delta P_Y$ in the Y-axis direction are expressed by the forms of the following expressions (1) and (2), the $P_{nm}$ is expressed by $P_{n1} + P_{1m}$.

$$\Delta P_X = (P_{11} \quad P_{21} \quad ... \quad P_{N1}) \quad \text{Expression (1)}$$

$$\Delta P_Y = (P_{11} \quad P_{12} \quad ... \quad P_{1M}) \quad \text{Expression (2)}$$

Although the details of the periodic phase structure will be described later, the diffuser plate of the present embodiment suppresses speckle noise by giving a periodic predetermined phase difference to each light transmitted through each optical element 53. Further, the diffuser plate of the present embodiment is configured such that at least one of N and M is an integer of 3 or more so that the unevenness of luminance and the unevenness of color are further mitigated.

Fig. 2 is a sectional view that illustrates an example of a cross section passing through the basic periodic structures 11, 21, 31 and 41 along the X-axis. As shown in the example of Fig. 2, in the diffuser plate 100, optical elements 53 each having an effective diameter "a" in the X-axis direction are arranged at intervals based on the effective diameter to form basic periodic structures 11 to 41 in the X-axis direction. Each basic structure has a raised portion 52 for creating an optical path length difference. The raised portion 52 forms a repeating periodic phase structure with Na including N optical elements as a period. Here, a thickness T of the planar base material 51 is the maximum thickness that can be regarded as flat. Specifically, the thickness is from the surface having no optical element 53 to the root of the optical element 53 having the minimum height in the basic block 50 (the optical element 53 in the basic periodic structure 11 in the example of Fig. 2). The optical path differences 71 and 72 are based on the optical element having the minimum height.

Fig. 3 is a sectional view that illustrates an example of a cross section passing through the basic periodic structures 14, 13, 12 and 11 along the Y-axis. As shown in the example of Fig. 3, in the diffuser plate 100, optical elements 53 having an effective diameter b in the Y-axis direction are arranged at intervals based on the effective diameter to constitute the basic periodic structures 14 to 11, Each basic structure has a raised portion 52 for creating an optical path length difference. The raised portion 52 forms a repeating phase structure with Mb including M optical elements as a period.

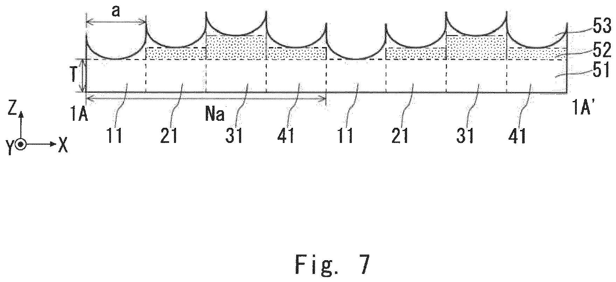

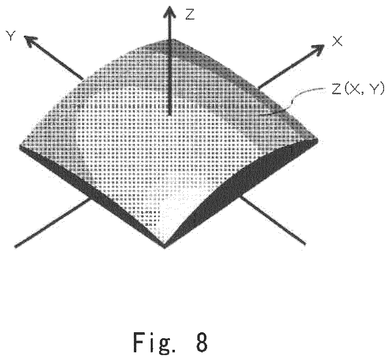

The shape of the optical element 53 is not particularly limited, and a shape of a lens that serves as a reference is designed from optical physical properties (particularly, refractive index) of the material to be used for the diffuser plate 100 and a desired diffusion angle distribution. The shape of the lens may be spherical or aspherical. Optical design is performed using conventional techniques such as the ray tracing method. Further, this is not limiting when it is desired to give anisotropy to the diffusion characteristics, and the aspect ratio of the lens can be arbitrarily set. A typical example is a quadrangular microlens as shown in Fig. 8. Further, it may be a concave lens which has an inverted shape of the microlens (see Fig. 7).

Next, details of the periodic phase structure will be described together with the principle thereof.

(Principle of optical path length difference set between optical elements)

When parallel light (wavelength $\lambda$) is incident on a microlens array in which square lenses having an effective diameter of L are arranged with a period of L, if there is no structure that creates an optical path length difference in each lens, the luminance distribution of the emitted light is discretized in the vertical and horizontal directions at a sine interval $\lambda/L$ (called diffracted light) due to the well-known diffraction grating action. When the incident light is not parallel light but has a conical shape with an apparent diameter of $\omega$, each discretized direction has a conical shape with an apparent diameter of $\omega$. When $\omega$ is larger than the $2\lambda/L$ value, the discretized state is substantially eliminated. However, when $\omega$ is smaller than $2\lambda/L$, the periodicity of the sinusoidal interval $\lambda/L$ remains in the luminance distribution as a remnant of discretization, which causes unevenness of luminance between light and dark.

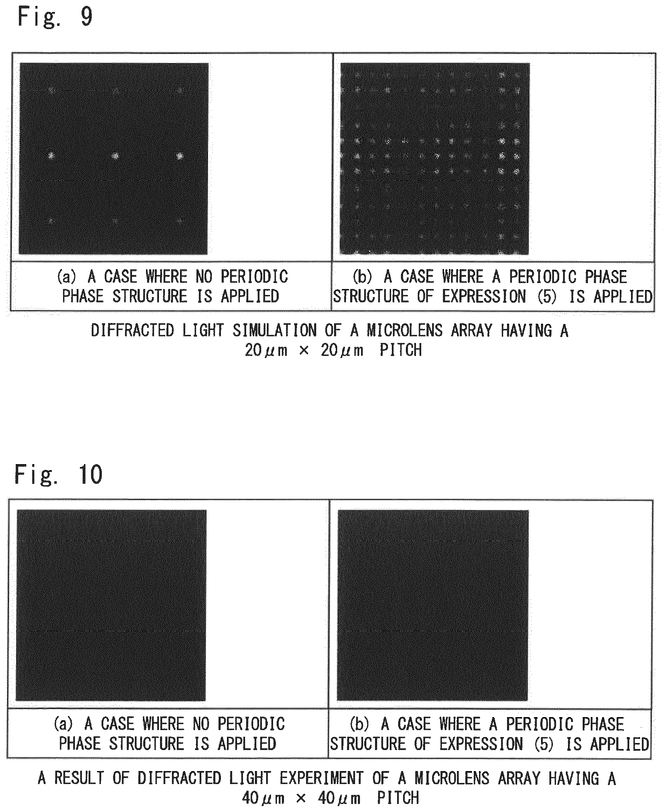

Fig. 9(a) shows a simulation result of diffracted light transmitted through a microlens array with a 20 $\mu$m × 20 $\mu$m period, which has no structure that creates an optical path length difference. As described above, when each lens does not have a structure that creates an optical path length difference, diffracted light that is discretized in the vertical and horizontal directions with a sine interval $\lambda/L$ is generated.

Further, Fig. 10(a) shows an image obtained by making laser light actually incident on a microlens array with a 40 $\mu$m × 40 $\mu$m period, which does not have a structure that creates an optical path length difference, and projecting the emitted light onto a vertical plane. As shown in Fig. 10(a), the laser light actually emitted is discretized, which is in good agreement with the simulation result of Fig. 9(a).

To overcome this unevenness of luminance, it is necessary to reduce the interval of diffracted light. As a solution to this problem, there is a method of providing a structure that creates an optical path length difference in the light incident on each lens. In the present embodiment, let us consider to provide a structure that creates an optical path length difference with a period of N lenses in the X-axis direction and M lenses in the Y-axis direction (at least one of N and M is an integer of 3 or more), and to add the sum of the optical path length difference included in the periodic phase structure of the X-axis direction and the optical path length difference included in the periodic phase structure of the Y-axis direction to the incident light. Creating an optical path length difference in an actual microlens can be realized by arranging the microlenses at different positions in the Z-axis direction by providing raised portions 52, for example, as shown in Fig. 2.

Here, if complex transmittance of the optical element 53 in the n-th row and the m-th column in the basic block 50 is denoted by g(n/$\lambda$), m/$\lambda$), directivity of the emitted light matches the square of the absolute value of Fourier transform G($\sin\theta_n$, $\sin\theta_m$) thereof. This matching relationship also holds for all the optical elements arranged periodically.

Further, the same thing holds for a two-dimensional periodic array of basic block 50 with a unit $g_{N,M}(n/\lambda, m/\lambda)$, which collectively includes N lenses in the X-axis direction and M lenses in the Y-axis direction. Therefore, the target directivity $|G_{N,M}(\sin\theta_n, \sin\theta_m)|^2$ is a discrete structure having an angular period of $\lambda/(Na)$ in the X-axis direction and $\lambda/(Mb)$ in the Y-axis direction, and its envelope is proportional to the directivity $|G(\sin\theta_n, \sin\theta_m)|^2$ of a single lens.

Therefore, by applying the NaxMb two-dimensional periodic phase structure, the angular period of the diffracted light can be reduced to 1/N in the X-axis direction and to 1/M in the Y-axis direction. Further, the unevenness of luminance is mitigated most under a condition that intensities of all the diffracted light are uniform. That is, the condition that the standard deviation of each element of $|G_{N,M}(\sin\theta_n, \sin\theta_m)|^2$, which is the directivity of the emitted light, is 0 is the best. Therefore, if the average value of each element of $|G_{N,M}(\sin\theta_n, \sin\theta_m)|^2$ is denoted by Ave, the smaller the following expression (4) is, the more preferable it is, and it is the most preferable when the expression (4) is 0.

$$\sqrt{\frac{1}{NM}\sum_1^M \sum_1^N (|G_{N,M}(\sin\theta_n, \sin\theta_m)|^2 - Ave)^2} \quad \text{Expression (4)}$$

The condition that the above-described expression (4) is 0 is an ideal condition in which the intensities of all diffracted light are uniform, but in reality, some unevenness of luminance may be allowed. In the present embodiment, if the standard deviation of each element of $G_{N,M}(\sin\theta_n, \sin\theta_m)$, which is the directivity of the emitted light, is 30% of the average value or less, it is judged that the unevenness of luminance is suppressed. That is, in the diffuser plate according to the present embodiment the ratio of the standard deviation to the average of the directivity represented by the following expression (3) is characteristically 0.3 or less, preferably 0.1 or less, and more preferably 0.

$$\frac{\sqrt{\frac{1}{NM}\sum_1^M \sum_1^N (|G_{N,M}(\sin\theta_n, \sin\theta_m)|^2 - Ave)^2}}{Ave} \quad \text{Expression (3)}$$

(In the expression (3), Ave is an average value of $|G(\sin\theta_n, \sin\theta_m)|^2$ of each optical element in the basic block.)

Conventionally, it has been known an example that the expression (3) is 0.3 or less only for N = M = 2 (Patent Literature 4). According to the present embodiment, it is possible to provide a microlens array in which the expression (3) is 0.3 or less even for N, M ≥ 3 or more. In order to make the unevenness of luminance due to the diffracted light of a microlens array inconspicuous, it is necessary to make the apparent diameter $\omega$ of the incident light larger than $2\lambda/(2L)$ when N = M = 2. When N = M = 3, the apparent diameter $\omega$ of the incident light needs to be larger than $2\lambda/(3L)$. Therefore, when N = M = 3, it is permissible to reduce the apparent diameter $\omega$ of the incident light to 2/3 times as large as that in the case of N = M = 2. Alternatively, the L value itself can be reduced to increase a resolution limit of the microlens array by 1.5 times. Therefore, if the present invention is used, a diffuser plate having higher efficiency than that of the conventional art can be obtained.

As an example, the case of N = M = 4 shown in the examples of Figs. 1 to 3 will be described in detail. Let $P_{nm}$ be a phase structure in the n-th row and the m-th column in the basic block. Consider the case where each lens does not have a structure that creates an optical path length difference. At this time, assuming that the phase difference for one period of the periodic phase structure is $\Delta P$, $\Delta P$ is expressed as follows:

$$\Delta P = \begin{pmatrix} 0 & 0 & 0 & 0 \\ 0 & 0 & 0 & 0 \\ 0 & 0 & 0 & 0 \\ 0 & 0 & 0 & 0 \end{pmatrix}$$

At this time, the complex transmittance $g(n/\lambda, m/\lambda)$ is given as follows:

$$g = \begin{pmatrix} 1 & 1 & 1 & 1 \\ 1 & 1 & 1 & 1 \\ 1 & 1 & 1 & 1 \\ 1 & 1 & 1 & 1 \end{pmatrix}$$

The square of the absolute value of Fourier transform G $(\sin\theta_n, \sin\theta_m)$ of the above-described $g(n/\lambda, m/\lambda)$ is given as follows:

$$|G|^2 = \begin{pmatrix} 256 & 0 & 0 & 0 \\ 0 & 0 & 0 & 0 \\ 0 & 0 & 0 & 0 \\ 0 & 0 & 0 & 0 \end{pmatrix}$$

A ratio of the standard deviation to the average is obtained from this $|G|^2$ as follows:

$$\frac{\sqrt{\frac{1}{NM}\sum_1^M \sum_1^N (|G|^2 - Ave)^2}}{Ave} = 3.87$$

Therefore, when no raised portion 52 is provided, the condition that the expression (3) is 0.3 or less is not satisfied.

Next, consider the case where the lens has a raised portion 52 that creates an optical path length difference at N = M = 4. Here, supposing as an example that the phase structure in the n-th row and the m-th column in the basic block is $P_{nm}$, a basic periodic phase difference $\Delta P_X$ in the X-axis direction and a basic periodic phase difference $\Delta P_Y$ in the Y-axis direction are set as follows.

$$\Delta P_X = \begin{pmatrix} 0 & \dfrac{1}{4}\lambda & \dfrac{2}{4}\lambda & \dfrac{1}{4}\lambda \end{pmatrix}$$

$$\Delta P_Y = \begin{pmatrix} 0 & \dfrac{1}{4}\lambda & \dfrac{2}{4}\lambda & \dfrac{1}{4}\lambda \end{pmatrix}$$

Here, if it is assumed that $P_{nm}$ is $P_{n1} + P_{1m}$, the periodic phase structure $\Delta P$ of the basic block is expressed as follows:

$$\Delta P = \begin{pmatrix} 0 & \frac{1}{4}\lambda & \frac{2}{4}\lambda & \frac{1}{4}\lambda \\ \frac{1}{4}\lambda & \frac{2}{4}\lambda & \frac{3}{4}\lambda & \frac{2}{4}\lambda \\ \frac{2}{4}\lambda & \frac{3}{4}\lambda & \lambda & \frac{3}{4}\lambda \\ \frac{1}{4}\lambda & \frac{2}{4}\lambda & \frac{3}{4}\lambda & \frac{2}{4}\lambda \end{pmatrix} \qquad \text{Expression (5)}$$

At this time, the Fourier transform G $(\sin\theta_n, \sin\theta_m)$ of $g(n/\lambda, m/\lambda)$ is as follows:

$$g = \begin{pmatrix} 1 & \exp(\frac{i\pi}{2}) & \exp(i\pi) & \exp(\frac{i\pi}{2}) \\ \exp(\frac{i\pi}{2}) & \exp(i\pi) & \exp(\frac{3i\pi}{2}) & \exp(i\pi) \\ \exp(i\pi) & \exp(\frac{3i\pi}{2}) & 1 & \exp(\frac{3i\pi}{2}) \\ \exp(\frac{i\pi}{2}) & \exp(i\pi) & \exp(\frac{3i\pi}{2}) & \exp(i\pi) \end{pmatrix}$$

The square of the absolute value of G $(\sin\theta_n, \sin\theta_m)$ obtained by Fourier transforming the $g(n/\lambda, m/\lambda)$ is as follows:

$$|G|^2 = \begin{pmatrix} 16 & 16 & 16 & 16 \\ 16 & 16 & 16 & 16 \\ 16 & 16 & 16 & 16 \\ 16 & 16 & 16 & 16 \end{pmatrix}$$

This represents that the emission angle of the diffracted light is evenly divided into 16 parts, that is, the diffracted light density will increase by 16 times. From this $|G|^2$, the ratio of the standard deviation to the average is obtained as follows:

$$\frac{\sqrt{\frac{1}{NM}\sum_{1}^{M}\sum_{1}^{N}(|G|^2 - Ave)^2}}{Ave} = 0$$

Therefore, it has been confirmed that the condition that the expression (3) is 0.3 or less is satisfied. The phase difference satisfying the expression (3) with N = M = 4 is not limited to the expression (5), and any phase difference can be set as long as the condition that the expression (3) is 0.3 or less is satisfied. Further, even when N and M are other than 4, any phase difference which satisfies the condition that the expression (3) is 0.3 or less may be set. Further, N and M do not have to be the same value, and may be set to different values such as N = 3 and M = 4.

As a specific example, the N and M are independently any of 3, 4, 5, 7 or 8, and when the wavelength of the incident light is $\lambda$, if the basic periodic phase difference $\Delta P_X$ in the X-axis direction and the basic periodic phase difference $\Delta P_Y$ in the Y-axis direction are independently any of the following $\Delta P_A$, the value of the expression (3) will be 0. Note that although it is possible to set N and M to 9 or more, since there are many examples, these will not be shown.

$$\Delta P_A = \begin{pmatrix} 0 & 0 & \frac{1}{3}\lambda \end{pmatrix}$$

$$\Delta P_A = \begin{pmatrix} 0 & 0 & 0 & \frac{2}{4}\lambda \end{pmatrix}$$

$$\Delta P_A = \begin{pmatrix} 0 & \frac{1}{4}\lambda & 0 & \frac{3}{4}\lambda \end{pmatrix}$$

$$\Delta P_A = \begin{pmatrix} 0 & \frac{1}{4}\lambda & \frac{2}{4}\lambda & \frac{1}{4}\lambda \end{pmatrix}$$

$$\Delta P_A = \begin{pmatrix} 0 & \frac{1}{5}\lambda & \frac{3}{5}\lambda & \frac{1}{5}\lambda & 0 \end{pmatrix}$$

$$\Delta P_A = \begin{pmatrix} 0 & \frac{2}{5}\lambda & \frac{1}{5}\lambda & \frac{2}{5}\lambda & 0 \end{pmatrix}$$

$$\Delta P_A = \begin{pmatrix} 0 & \frac{1}{5}\lambda & 0 & \frac{2}{5}\lambda & \frac{2}{5}\lambda \end{pmatrix}$$

$$\Delta P_A = \begin{pmatrix} 0 & \frac{1}{5}\lambda & \frac{1}{5}\lambda & 0 & \frac{3}{5}\lambda \end{pmatrix}$$

$$\Delta P_A = \begin{pmatrix} 0 & \frac{1}{5}\lambda & \frac{4}{5}\lambda & \frac{4}{5}\lambda & \frac{1}{5}\lambda \end{pmatrix}$$

$$\Delta P_A = \begin{pmatrix} 0 & \frac{2}{5}\lambda & \frac{3}{5}\lambda & \frac{3}{5}\lambda & \frac{2}{5}\lambda \end{pmatrix}$$

$$\Delta P_A = \begin{pmatrix} 0 & \frac{1}{7}\lambda & \frac{3}{7}\lambda & \frac{6}{7}\lambda & \frac{3}{7}\lambda & \frac{1}{7}\lambda & 0 \end{pmatrix}$$

$$\Delta P_A = \begin{pmatrix} 0 & \frac{2}{7}\lambda & \frac{6}{7}\lambda & \frac{5}{7}\lambda & \frac{6}{7}\lambda & \frac{2}{7}\lambda & 0 \end{pmatrix}$$

$$\Delta P_A = \begin{pmatrix} 0 & \frac{3}{7}\lambda & \frac{2}{7}\lambda & \frac{4}{7}\lambda & \frac{2}{7}\lambda & \frac{3}{7}\lambda & 0 \end{pmatrix}$$

$$\Delta P_A = \begin{pmatrix} 0 & \frac{1}{7}\lambda & 0 & \frac{4}{7}\lambda & \frac{6}{7}\lambda & \frac{6}{7}\lambda & \frac{4}{7}\lambda \end{pmatrix}$$

$$\Delta P_A = \begin{pmatrix} 0 & \frac{1}{7}\lambda & \frac{1}{7}\lambda & 0 & \frac{5}{7}\lambda & \frac{2}{7}\lambda & \frac{5}{7}\lambda \end{pmatrix}$$

$$\Delta P_A = \begin{pmatrix} 0 & \frac{1}{7}\lambda & \frac{4}{7}\lambda & \frac{2}{7}\lambda & \frac{2}{7}\lambda & \frac{4}{7}\lambda & \frac{1}{7}\lambda \end{pmatrix}$$

$$\Delta P_A = \begin{pmatrix} 0 & \frac{1}{7}\lambda & \frac{5}{7}\lambda & \frac{5}{7}\lambda & \frac{1}{7}\lambda & 0 & \frac{2}{7}\lambda \end{pmatrix}$$

$$\Delta P_A = \begin{pmatrix} 0 & \frac{1}{7}\lambda & \frac{6}{7}\lambda & \frac{1}{7}\lambda & \frac{0}{7}\lambda & \frac{3}{7}\lambda & \frac{3}{7}\lambda \end{pmatrix}$$

$$\Delta P_A = \begin{pmatrix} 0 & \frac{2}{7}\lambda & \frac{1}{7}\lambda & \frac{4}{7}\lambda & \frac{4}{7}\lambda & \frac{1}{7}\lambda & \frac{2}{7}\lambda \end{pmatrix}$$

$$\Delta P_A = \begin{pmatrix} 0 & \frac{2}{7}\lambda & \frac{2}{7}\lambda & 0 & \frac{3}{7}\lambda & \frac{4}{7}\lambda & \frac{3}{7}\lambda \end{pmatrix}$$

$$\Delta P_A = \begin{pmatrix} 0 & \frac{2}{7}\lambda & \frac{3}{7}\lambda & \frac{3}{7}\lambda & \frac{2}{7}\lambda & 0 & \frac{4}{7}\lambda \end{pmatrix}$$

$$\Delta P_A = \begin{pmatrix} 0 & \frac{3}{7}\lambda & \frac{5}{7}\lambda & \frac{6}{7}\lambda & \frac{6}{7}\lambda & \frac{5}{7}\lambda & \frac{3}{7}\lambda \end{pmatrix}$$

$$\Delta P_A = \begin{pmatrix} 0 & 0 & 0 & \frac{2}{8}\lambda & \frac{4}{8}\lambda & 0 & \frac{4}{8}\lambda & \frac{2}{8}\lambda \end{pmatrix}$$

$$\Delta P_A = \begin{pmatrix} 0 & 0 & \frac{2}{8}\lambda & 0 & 0 & \frac{4}{8}\lambda & \frac{2}{8}\lambda & \frac{4}{8}\lambda \end{pmatrix}$$

$$\Delta P_A = \begin{pmatrix} 0 & \frac{1}{8}\lambda & 0 & \frac{3}{8}\lambda & \frac{4}{8}\lambda & \frac{1}{8}\lambda & \frac{4}{8}\lambda & \frac{3}{8}\lambda \end{pmatrix}$$

$$\Delta P_A = \begin{pmatrix} 0 & \frac{1}{8}\lambda & 0 & \frac{7}{8}\lambda & \frac{4}{8}\lambda & \frac{1}{8}\lambda & \frac{4}{8}\lambda & \frac{7}{8}\lambda \end{pmatrix}$$

$$\Delta P_A = \begin{pmatrix} 0 & \frac{1}{8}\lambda & \frac{2}{8}\lambda & \frac{1}{8}\lambda & 0 & \frac{5}{8}\lambda & \frac{2}{8}\lambda & \frac{5}{8}\lambda \end{pmatrix}$$

$$\Delta P_A = \begin{pmatrix} 0 & \frac{1}{8}\lambda & \frac{2}{8}\lambda & \frac{5}{8}\lambda & 0 & \frac{5}{8}\lambda & \frac{2}{8}\lambda & \frac{1}{8}\lambda \end{pmatrix}$$

$$\Delta P_A = \begin{pmatrix} 0 & \frac{1}{8}\lambda & \frac{4}{8}\lambda & \frac{3}{8}\lambda & \frac{4}{8}\lambda & \frac{1}{8}\lambda & 0 & \frac{3}{8}\lambda \end{pmatrix}$$

$$\Delta P_A = \begin{pmatrix} 0 & \frac{1}{8}\lambda & \frac{4}{8}\lambda & \frac{7}{8}\lambda & \frac{4}{8}\lambda & \frac{1}{8}\lambda & 0 & \frac{7}{8}\lambda \end{pmatrix}$$

$$\Delta P_A = \begin{pmatrix} 0 & \frac{1}{8}\lambda & \frac{6}{8}\lambda & \frac{1}{8}\lambda & 0 & \frac{5}{8}\lambda & \frac{6}{8}\lambda & \frac{5}{8}\lambda \end{pmatrix}$$

$$\Delta P_A = \begin{pmatrix} 0 & \frac{1}{8}\lambda & \frac{6}{8}\lambda & \frac{5}{8}\lambda & 0 & \frac{5}{8}\lambda & \frac{6}{8}\lambda & \frac{1}{8}\lambda \end{pmatrix}$$

$$\Delta P_A = \begin{pmatrix} 0 & \frac{2}{8}\lambda & 0 & \frac{4}{8}\lambda & \frac{4}{8}\lambda & \frac{2}{8}\lambda & \frac{4}{8}\lambda & \frac{4}{8}\lambda \end{pmatrix}$$

$$\Delta P_A = \begin{pmatrix} 0 & \frac{2}{8}\lambda & \frac{2}{8}\lambda & \frac{2}{8}\lambda & 0 & \frac{6}{8}\lambda & \frac{2}{8}\lambda & \frac{6}{8}\lambda \end{pmatrix}$$

$$\Delta P_A = \begin{pmatrix} 0 & \frac{2}{8}\lambda & \frac{2}{8}\lambda & \frac{6}{8}\lambda & 0 & \frac{6}{8}\lambda & \frac{2}{8}\lambda & \frac{2}{8}\lambda \end{pmatrix}$$

$$\Delta P_A = \begin{pmatrix} 0 & \frac{2}{8}\lambda & \frac{4}{8}\lambda & \frac{4}{8}\lambda & \frac{4}{8}\lambda & \frac{2}{8}\lambda & 0 & \frac{4}{8}\lambda \end{pmatrix}$$

$$\Delta P_A = \begin{pmatrix} 0 & \frac{3}{8}\lambda & 0 & \frac{5}{8}\lambda & \frac{4}{8}\lambda & \frac{3}{8}\lambda & \frac{4}{8}\lambda & \frac{5}{8}\lambda \end{pmatrix}$$

$$\Delta P_A = \left(0 \quad \frac{3}{8}\lambda \quad \frac{2}{8}\lambda \quad \frac{3}{8}\lambda \quad 0 \quad \frac{7}{8}\lambda \quad \frac{2}{8}\lambda \quad \frac{7}{8}\lambda\right)$$

Fig. 9(b) shows a simulation result of diffracted light transmitted through a microlens array with a 20 μm × 20 μm period, which has a structure that creates an optical path length difference of the expression (5). As shown in the above calculation result, it can be confirmed that the density of the diffracted light has increased by 16 times compared with that in Fig. 9(a), and the unevenness of luminance is reduced. Further, Fig. 10(b) shows an image obtained by making the emitted light of the laser light incident on the microlens array with an actual 40 μm × 40 μm period, which has a structure that creates an optical path length difference of the expression (5), and projecting the emitted light onto a vertical plane. In order to create an optical path length difference corresponding to the expression (5) in this microlens array, a height difference ΔH is imparted to the lens height. In a transmission-type diffuser plate, when the refractive index of the material constituting the microlens array is 1.5 and the wavelength λ of the light source used is 630 nm red light, which has the longest wavelength within the visible light, the ΔH is as shown below:

$$\Delta H = \begin{pmatrix} 0 & 0.315\mu m & 0.63\mu m & 0.315\mu m \\ 0.315\mu m & 0.63\mu m & 0.945\mu m & 0.63\mu m \\ 0.63\mu m & 0.945\mu m & 0 & 0.945\mu m \\ 0.315\mu m & 0.63\mu m & 0.945\mu m & 0.63\mu m \end{pmatrix}$$

As shown in Fig. 10(b), the density of the emitted laser light has increased by 16 times, which is in good agreement with the simulation result.

Even when the wavelength λ of the light source used is 530 nm green light, which has the highest visibility in the visible light, or 580 nm yellow light, which has an intermediate wavelength between red light having the longest wavelength and green light having the highest visibility in the visible light, it is possible to determine the ΔH to be imparted, in the same manner.

When light is incident on the entire microlens array, the density of diffracted light increases as N and M, which are the numbers of lenses corresponding to one period of the periodic phase structure, increase. Therefore, in general, the larger N and M are, the greater the effect of reducing the unevenness of luminance, which is preferable. On the other hand, when the lens region in which light is incident is limited, it is preferable to adjust the size of one period of the periodic phase structure to the lens region. For example, when diffusing the laser beam light that is not scanned, the size of one period of the periodic phase structure may be set to about the size of the laser beam diameter. However, when the laser beam light is scanned over the entire microlens array, the larger N and M are, the more preferable it is as described above.

Next, the method for setting the phase difference will be described. In the present invention, the phase difference is represented using the difference in the optical path length of the light transmitted through or reflected by the microlens, where the difference is normalized by using the wavelength. To change the phase difference, various factors such as lens height, curvature, pitch, arrangement, and refractive index can be selected. The present embodiment is characteristic in that to impart a phase difference to each lens, only the height of the raised portion 52 of the lens is changed, whilst the curvatures of the individual lenses are substantially the same.

In the present embodiment, as shown in Figs. 2 to 3, the individual lenses are made to have the same cross section profile, and the height of the raised portion 52 is controlled to change a convex portion maximum height of the microlens. That is, the convex portion maximum height of the microlens is determined by the sum of the lens height of the optical element 53 determined by optical design and the height of the raised portion 52. In the present invention, the lens height is a fixed value, and the height of the raised portion 52 is changed among the individual lenses to create a phase difference in each microlens, so as to mitigate the unevenness of luminance and unevenness of color caused by diffraction-related factors. When the height difference of the convex portion maximum height of each microlens is denoted by ΔH, and when the refractive index of the material constituting the microlens array is denoted by "n" and the wavelength of the light source to be used is denoted by λ [nm], the phase difference corresponding to ΔH is expressed as:

$$\{1000 \times \Delta H \times (n\text{-}1)\}/\lambda$$

Here, when the light source includes a plurality of wavelengths, the calculation may be performed with the longest wavelength or the wavelength with the highest visibility as representative one among the wavelengths to be used.

As a modified example of the above-described first embodiment, Fig. 7 shows an example of a 1A-1A' sectional view in the case of a concave lens. The shape of the optical element 53 is different from that of the first embodiment. Although a 1B-1B' sectional view is not shown, the optical element 53 also has a concave lens shape having an effective diameter of b.

The optical path difference in the case of a concave lens may be considered by replacing the above-described ΔH with a height difference ΔD of the concave portion maximum depth of each microlens.

Further, as a modified example of the above-described first embodiment, a reflection-type diffuser plate may be used (not shown). A reflection-type diffuser plate can be manufactured by forming a reflective film such as an aluminum vapor deposition film on the surface of the optical element side or the opposite side of the diffuser plate of the first embodiment.

If the optical element has a convex lens shape in a reflection-type diffuser plate, incident light is reflected on the surface of the microlens having distribution in the convex portion maximum height, and optical path difference of light passing through the air occurs, resulting in a phase difference between the individual microlenses. The phase difference corresponding to the maximum height difference ΔH of the convex portion maximum height between the individual microlenses at this point is expressed by:

$$\{1000 \times 2\Delta H\}/\lambda$$

Where, if the light source includes a plurality of wavelengths, then, in the same manner as in the case of a transmission type, the calculation may be performed with the longest wavelength or the wavelength with the highest visibility as representative one among the wavelengths to be used.

Moreover, in the case of the reflection-type diffuser plate, the part that is defined as "complex transmittance" in the principle of the optical path length difference set between the optical elements described above can be similarly considered by reading it as "complex reflectance" and thus it is possible to design a structure that creates an optical path length difference.

Further, when the optical element has a concave lens shape in the reflection-type diffuser plate, the same discussion can be applied as in the case of the transmission type, in which the maximum height difference ΔD of the concave portion maximum depth of the individual microlenses is considered in place of the ΔH.

As the method for processing the microlens array based on the design data, various processing methods can be used such as mechanical processing, photolithography using a mask, maskless lithography, etching, and laser ablation. A mold is manufactured using these techniques, and a resin is molded to manufacture a diffuser plate member having a microlens array. The same mold may be used as a direct reflection-type diffuser plate. The molding method should be selected as appropriate from various molding techniques such as roll-to-roll molding, hot press molding, molding using ultraviolet curable resin, injection molding, and the like. If the diffuser plate member is to be used as a reflection-type diffusion component, then it should be used with a reflective film such as aluminum vapor deposition film formed on its front or back surface.

Hereinafter, as an example, a method for producing a mold by laser scanning maskless lithography and electroforming, and molding a diffuser plate by hot press molding using the mold will be described in more detail.

Maskless lithography includes a resist coating step of coating a photoresist on a substrate, an exposure step of exposing a fine pattern to the photoresist, and a development step of developing the photoresist that has been subjected to the exposure to obtain an original component having the fine pattern. In the resist coating step, a positive photoresist is coated on the substrate. The thickness of the coating film of the photoresist should be equal to or greater than the height of the fine pattern. It is preferable that the coating film is subjected to a baking process at 70 to 110°C. In the exposure step, the photoresist coated in the coating step is irradiated with a laser beam while it is being scanned by the laser beam so as to expose the photoresist. The wavelength of the laser beam may be selected according to the type of the photoresist and, for example, 351 nm, 364 nm, 458 nm, 488 nm (oscillation wavelength of Ar+ laser), 351 nm, 406 nm, 413 nm (oscillation wavelength of Kr+ laser), 352 nm, 442 nm (oscillation wavelength of He-Cd laser), 355 nm, 473 nm (pulse oscillation wavelength of diode-pumped solid-state laser), 375 nm, 405 nm, 445 nm, 488 nm (semiconductor laser), and the like can be selected.

In the exposure step of a microlens having a raised portion, the resist is scanned by the laser while the laser power is modulated to a value determined by the shape of the lens and the resist sensitivity. The laser used in the laser exposure is focused by an objective lens to focus on the resist. In order to increase the difference in the height of raising between a certain microlens and another lens adjacent thereto, the difference in laser power between the microlenses adjacent to each other should be increased. However, since the laser spot generally exhibits a Gaussian distribution with a finite diameter, excessive increase in the difference in the laser power causes increase in the areas where the lens shape near the boundary between the adjacent lenses deviates from the shape specified based on the optical design, reducing the proportion of the lens sections where the diffusion angle distribution is the same as those of the other lenses. Accordingly, in order to obtain the same diffusion angle distribution as that of the optical design, it is preferable to keep the height difference of the raised portion between the adjacent microlenses within a certain range. According to the present invention, since the heights of the lens portions of the individual microlenses are constant, the maximum height difference $\Delta H$ of the convex portion maximum height of the individual microlenses agrees with the maximum height difference of the height of raising. Accordingly, it is preferable to set the height of raising so that the phase difference normalized by the aforementioned wavelength falls within the range of 0 to 1.

In the development step, the photoresist that has been subjected to the exposure is developed. The development of the photoresist can be carried out by a known method. The developer is not particularly limited, and an alkali developer such as tetramethylammonium hydroxide (TMAH) can be used. In the development step, the photoresist is removed according to the exposure amount, and the fine pattern shape of the photoresist is formed. If a positive resist is used in the exposure step and the exposure is carried out with the laser power according to the shape of the microlens configured by a concave lens, then an original microlens component with the concave lens formed on the photoresist is obtained.

Next, in the electroforming step, the surface of the photoresist having the fine pattern that has been formed by the exposure and the development is subjected to a conductivity treatment by a method such as vapor deposition of nickel metal. Further, nickel is deposited on the surface of the vapor-deposited film in a plate shape with a desired thickness by electroforming and, when this nickel plate is peeled from the photoresist original component, a die (stamper) will be obtained in which the microlens array based on a convex lens is formed with the concave lens shape of the photoresist has been inverted and transferred.

In the molding step, the convex lens-shaped fine pattern is transferred to an acrylic sheet by a hot press method in which the acrylic sheet is pressed while being heated using the above-described stamper. As a result, it is made possible to manufacture a microlens array member using a concave lens. If double-sided molding with stampers arranged on both sides is adopted, it is also possible to mold a member with a microlens array formed on both sides. The resin used in the molding is not limited to acrylic, and a resin that can be used for the diffuser plate should be selected according to the molding conditions. In order to obtain a microlens array member configured by a convex lens, electroforming duplication is carried out using, as the mold, the stamper (convex lens) that has been obtained in the above-described electroforming step, and a stamper with a microlens array formed using a concave lens is produced, and this stamper should be used to perform hot press molding. Whilst it will be appreciated that a method for exposing the resist by modulating the exposure power according to the convex lens in the exposure step of the maskless lithography can be adopted, the above-described method for performing electroforming duplication of the stamper in the electroforming step will be simpler.

When the diffuser plate is to be used as a reflection-type diffuser plate, for example, an aluminum reflective film should be vacuum-deposited on the surface of a member on which a microlens array is formed, and incident light should be reflected by the aluminum surface. Also, when the microlens array is a member formed on only one surface of the substrate, a possible configuration is such that the light may be incident from the mirror surface side of the substrate and reflected by the microlens array surface on which the aluminum reflective film is formed. On the other hand, a configuration in which light is incident from the microlens array surface on which no reflective film is formed and reflected on the mirror surface side on which the reflective film is formed can also be used as a diffuser plate. Further, another possible configuration may be adopted according to which a substrate with microlens array formed on both sides is used, the thickness of the reflective film on the incidence side is adjusted to provide a half mirror, and the back side thereof is made to have a reflectance of almost 100%, and thereby a diffuser plate using two microlens arrays, i.e., microlens arrays provided on the front and back surfaces can be obtained. Also, if necessary, a protective layer may be coated to protect the aluminum reflective film.

[Second embodiment]

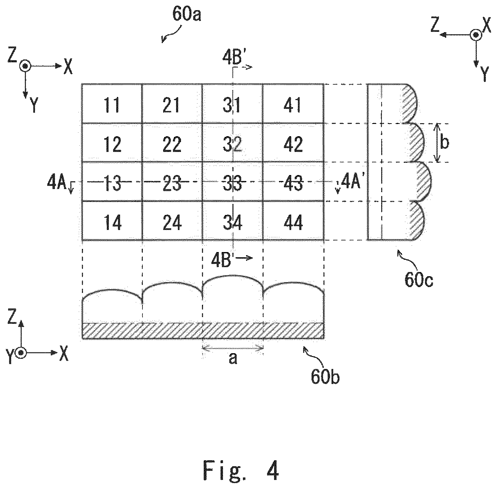

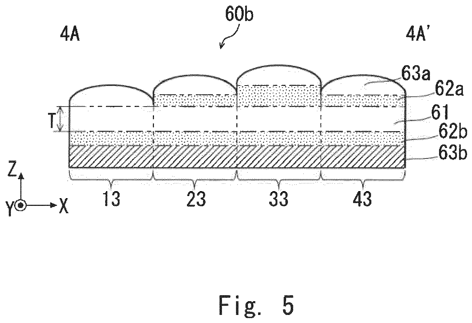

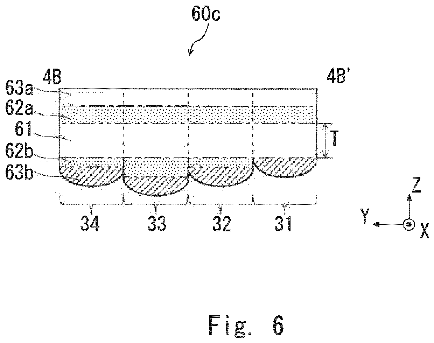

A diffuser plate according to a second embodiment will be described with reference to Figs. 4 to 6. Fig. 4 shows a front view 60a illustrating a basic block 60, a side view 60b seen in the Y-axis direction, and a side view 60c seen in the X-axis direction in the diffuser plate of the second embodiment. Fig. 5 is a 4A-4A' sectional view in the diffuser plate of Fig. 4, and Fig. 6 is a 4B-4B' sectional view in the diffuser plate of Fig. 4. In the examples of Figs. 4 to 6, N = M = 4.

The diffuser plate of the second embodiment is a transmission-type diffuser plate, and includes a first optical element 63a having an effective diameter "a" in the X-axis direction on one surface (+Z side surface) of a planar base material 61, and a second optical element 63b having an effective diameter "b" in the Y-axis direction on the other surface (—Z side surface) of the base material. Although different from the diffuser plate of the first embodiment in this respect, by supposing that an optical element with an effective diameter "a" in the X-axis direction and an effective diameter "b" in the Y-axis direction are formed through the combination of the first optical element 63a and the second optical element 63b, a periodic phase structure that has N rows and M columns as the basic block and creates an Na×Mb two-dimensional optical path length difference can be treated in the same manner as in the first embodiment.

Fig. 5 is a sectional view that illustrates an example of a cross section passing through basic periodic structures 13, 23, 33 and 43 along the X-axis. As shown in the example of Fig. 5, in the diffuser plate of the second embodiment, first optical elements 63a each having an effective diameter "a" in the X-axis direction are arranged at intervals based on the effective diameter, thereby constituting the basic periodic structures 13 to 43 in the X-axis direction.

Further, Fig. 6 is a sectional view that illustrates an example of a cross section passing through basic periodic structures 34, 33, 32 and 31 along the Y-axis. As shown in the example of Fig. 6, in the diffuser plate of the second embodiment, second optical elements 63b each having an effective diameter "b" in the Y-axis direction are arranged at intervals based on the effective diameter, thereby constituting the basic periodic structures 34 to 31.

Each basic structure has raised portions for respectively creating an optical path length difference. In the examples of Figs. 5 and 6, a first raised portion 62a is formed on the first optical element 63a side, and a second raised portion 62b is formed on the second optical element 63b side. In this case, by configuring such that the first raised portion 62a has a height based on the above-described basic periodic phase difference $\Delta P_X$ in the X-axis direction, and the second raised portion 62b has a height based on the above-described basic periodic phase difference $\Delta P_Y$ in the Y-axis direction, it is made possible, through this combination, to form a periodic phase structure that creates a predetermined optical path length difference. Since the design method of the structure that creates an optical path length difference is the same as that of the first embodiment, the description thereof will be omitted here.

A typical example of shapes of the first optical element and the second optical element is a lenticular lens. The shape of the lenticular lens is not particularly limited, and a reference shape is designed from optical physical properties (particularly, refractive index) of the material used for the diffuser plate and a desired diffusion angle distribution. Further, it may be a concave lens which has an inverted shape of the lenticular lens.

Further, a reflection-type diffuser plate may be made by forming a reflective film such as an aluminum vapor deposition film on one of the first optical element and the second optical element.

In common between the diffuser plate of the first embodiment and the diffuser plate of the second embodiment, speckle noise is suppressed by giving a periodic predetermined phase difference to respective light transmitted through or reflected by each optical element. Further, in the diffuser plate of the first embodiment and the diffuser plate of the second embodiment, by configuring such that at least one of N and M is an integer of 3 or more, it is made possible to further mitigate the unevenness of luminance and the unevenness of color.

**Examples**

Hereinafter, a more detailed description will be given by using examples. Note that the present invention is not limited to the following examples.

In the following examples, an example relating to a transmission-type diffuser plate in which a microlens array is formed on one surface of a planar base material is shown.

<Example 1> N = M = 3

Let us consider a microlens array which satisfies the condition that the expression (3) is 0.3 or less with N = M = 3. Here, as an example, supposing that a phase difference for one period of the periodic phase structure in the X-axis direction and the Y-axis direction be $\Delta P_X$ and $\Delta P_Y$, $\Delta P_X$ and $\Delta P_Y$ are set as follows:

$$\Delta P_X = \begin{pmatrix} 0 & 0 & \dfrac{1}{3}\lambda \end{pmatrix}$$

$$\Delta P_Y = \begin{pmatrix} 0 & 0 & \dfrac{1}{3}\lambda \end{pmatrix}$$

A phase difference $\Delta P$ for one period of a periodic phase structure in which the X-axis direction and the Y-axis direction are combined is set by the sum of the phase difference $\Delta P_X$ in the X-axis direction and the phase difference $AP_Y$ in the Y-axis direction, and therefore is expressed as follows:

$$\Delta P = \begin{pmatrix} 0 & 0 & \frac{1}{3}\lambda \\ 0 & 0 & \frac{1}{3}\lambda \\ \frac{1}{3}\lambda & \frac{1}{3}\lambda & \frac{2}{3}\lambda \end{pmatrix} \qquad \text{Expression (6)}$$

Based on the phase difference $\Delta P$, a ratio of the standard deviation to the average of directivity $|G|^2$ of emitted light is obtained as follows:

$$\frac{\sqrt{\frac{1}{NM}\Sigma_1^M \Sigma_1^N (|G|^2 - Ave)^2}}{Ave} \approx 0$$

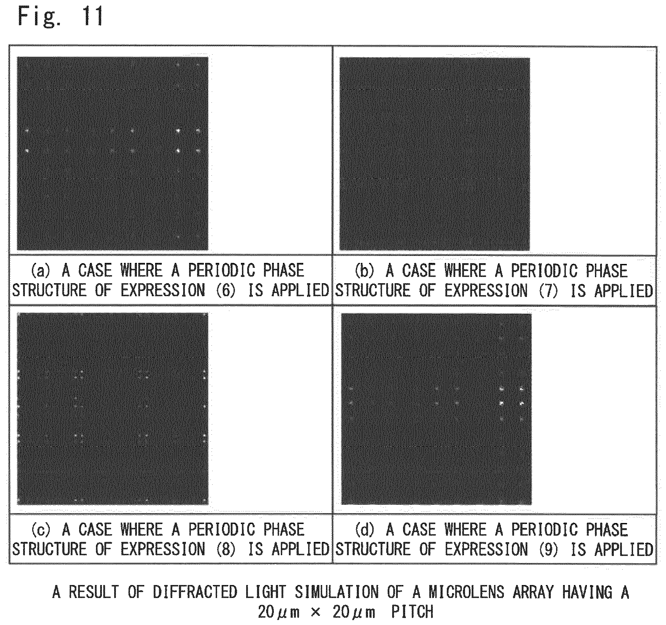

Therefore, the condition that the expression (3) is 0.3 or less is satisfied. The result of the diffracted light simulation at this time is shown in Fig. 11(a). Compared with Fig. 9(a), the density of the diffracted light has increased by 9 10 times, and it can be confirmed that the unevenness of luminance is reduced. The phase difference which satisfies the condition that the expression (3) is 0.3 or less with N = M = 3 is not limited to the expression (6), and any phase difference may be set as long as the condition that the expression (3) is 0.3 or less is satisfied.

15 <Example 2> N = M = 5

Let us consider a microlens array which satisfies the condition that the expression (3) is 0.3 or less with N = M = 5. Here, as an example, supposing that a phase difference for one period of the periodic phase structure in the X-axis direction and the Y-axis direction be $\Delta P_X$ and $\Delta P_Y$, $\Delta P_X$ and $AP_Y$ are set as 20 follows:

$$\Delta P_X = \begin{pmatrix} 0 & \frac{2}{5}\lambda & \frac{1}{5}\lambda & \frac{2}{5}\lambda & 0 \end{pmatrix}$$

$$\Delta P_Y = \begin{pmatrix} 0 & \frac{2}{5}\lambda & \frac{1}{5}\lambda & \frac{2}{5}\lambda & 0 \end{pmatrix}$$

A phase difference $\Delta P$ for one period of a periodic phase structure in which the X-axis direction and the Y-axis direction are combined is set by the sum of the phase difference $\Delta P_X$ in the X-axis direction and the phase difference $AP_Y$ in the Y-axis direction, and therefore is expressed as follows:

$$\Delta P = \begin{pmatrix} 0 & \frac{2}{5}\lambda & \frac{1}{5}\lambda & \frac{2}{5}\lambda & 0 \\ \frac{2}{5}\lambda & \frac{4}{5}\lambda & \frac{3}{5}\lambda & \frac{4}{5}\lambda & \frac{2}{5}\lambda \\ \frac{1}{5}\lambda & \frac{3}{5}\lambda & \frac{2}{5}\lambda & \frac{3}{5}\lambda & \frac{1}{5}\lambda \\ \frac{2}{5}\lambda & \frac{4}{5}\lambda & \frac{3}{5}\lambda & \frac{4}{5}\lambda & \frac{2}{5}\lambda \\ 0 & \frac{2}{5}\lambda & \frac{1}{5}\lambda & \frac{2}{5}\lambda & 0 \end{pmatrix} \qquad \text{Expression (7)}$$

Based on the phase difference ΔP, a ratio of the standard deviation to the average of directivity $|G|^2$ of emitted light is obtained as follows:

$$\frac{\sqrt{\frac{1}{NM} \sum_1^M \sum_1^N (|G|^2 - \text{Ave})^2}}{\text{Ave}} = 0$$

Therefore, the condition that the expression (3) is 0.3 or less is satisfied. The result of the diffracted light simulation at this time is shown in Fig. 11(b). Compared with Fig. 9(a), the density of the diffracted light has increased by 25 times, and it can be confirmed that the unevenness of luminance is reduced. The phase difference which satisfies the condition that the expression (3) is 0.3 or less with N = M = 5 is not limited to the expression (7), and any phase difference may be set as long as the condition that the expression (3) is 0.3 or less is satisfied.

<Example 3> N = M = 7

Let us consider a microlens array which satisfies the condition that the expression (3) is 0.3 or less with N = M = 7. Here, as an example, supposing that a phase difference for one period of the periodic phase structure in the X-axis direction and the Y-axis direction be $\Delta P_X$ and $\Delta P_Y$, $\Delta P_X$ and $\Delta P_Y$ are set as follows:

$$\Delta P_X = \begin{pmatrix} 0 & \frac{3}{7}\lambda & \frac{2}{7}\lambda & \frac{4}{7}\lambda & \frac{2}{7}\lambda & \frac{3}{7}\lambda & 0 \end{pmatrix}$$

$$\Delta P_Y = \begin{pmatrix} 0 & \frac{3}{7}\lambda & \frac{2}{7}\lambda & \frac{4}{7}\lambda & \frac{2}{7}\lambda & \frac{3}{7}\lambda & 0 \end{pmatrix}$$

A phase difference ΔP for one period of a periodic phase structure in which the X-axis direction and the Y-axis direction are combined is set by the sum of the phase difference $\Delta P_X$ in the X-axis direction and the phase difference $\Delta P_Y$ in the Y-axis direction, and therefore is expressed as follows:

$$\Delta P = \begin{pmatrix} 0 & \frac{3}{7}\lambda & \frac{2}{7}\lambda & \frac{4}{7}\lambda & \frac{2}{7}\lambda & \frac{3}{7}\lambda & 0 \\ \frac{3}{7}\lambda & \frac{6}{7}\lambda & \frac{5}{7}\lambda & \frac{7}{7}\lambda & \frac{5}{7}\lambda & \frac{6}{7}\lambda & \frac{3}{7}\lambda \\ \frac{2}{7}\lambda & \frac{5}{7}\lambda & \frac{4}{7}\lambda & \frac{6}{7}\lambda & \frac{4}{7}\lambda & \frac{5}{7}\lambda & \frac{2}{7}\lambda \\ \frac{4}{7}\lambda & \frac{7}{7}\lambda & \frac{6}{7}\lambda & \frac{8}{7}\lambda & \frac{6}{7}\lambda & \frac{7}{7}\lambda & \frac{4}{7}\lambda \\ \frac{2}{7}\lambda & \frac{5}{7}\lambda & \frac{4}{7}\lambda & \frac{6}{7}\lambda & \frac{4}{7}\lambda & \frac{5}{7}\lambda & \frac{2}{7}\lambda \\ \frac{3}{7}\lambda & \frac{6}{7}\lambda & \frac{5}{7}\lambda & \frac{7}{7}\lambda & \frac{5}{7}\lambda & \frac{6}{7}\lambda & \frac{3}{7}\lambda \\ 0 & \frac{3}{7}\lambda & \frac{2}{7}\lambda & \frac{4}{7}\lambda & \frac{2}{7}\lambda & \frac{3}{7}\lambda & 0 \end{pmatrix} \quad \text{Expression (8)}$$

Based on the phase difference $\Delta P$, a ratio of the standard deviation to the average of directivity $|G|^2$ of emitted light is obtained as follows:

$$\frac{\sqrt{\frac{1}{NM} \sum_1^M \sum_1^N (|G|^2 - Ave)^2}}{Ave} = 0$$

Therefore, the condition that the expression (3) is 0.3 or less is satisfied. The result of the diffracted light simulation at this time is shown in Fig. 11(c). Compared with Fig. 9(a), the density of the diffracted light has increased by 49 times, and it can be confirmed that the unevenness of luminance is reduced. The phase difference which satisfies the condition that the expression (3) is 0.3 or less with N = M = 7 is not limited to the expression (8), and any phase difference may be set as long as the condition that the expression (3) is 0.3 or less is satisfied.

<Example 4> N = 3, M = 4

Let us consider a case in which N and M are different from each other, for example, a microlens array which satisfies the condition that the expression (3) is 0.3 or less with N = 3 and M = 4. Here, as an example, supposing that a phase difference for one period of the periodic phase structure in the X-axis direction and the Y-axis direction be $\Delta P_X$ and $\Delta P_Y$, $\Delta P_X$ and $\Delta P_Y$ are set as follows:

$$\Delta P_X = \begin{pmatrix} 0 & \frac{1}{3}\lambda & \frac{1}{3}\lambda \end{pmatrix}$$

$$\Delta P_Y = \begin{pmatrix} 0 & \frac{1}{4}\lambda & \frac{2}{4}\lambda & \frac{1}{4}\lambda \end{pmatrix}$$

A phase difference $\Delta P$ for one period of a periodic phase structure in which the X-axis direction and the Y-axis direction are combined is set by the sum of the phase difference $\Delta P_X$ in the X-axis direction and the phase difference $\Delta P_Y$ in the Y-axis direction, and therefore is expressed as follows:

$$\Delta P = \begin{pmatrix} 0 & \frac{4}{12}\lambda & \frac{4}{12}\lambda \\ \frac{3}{12}\lambda & \frac{7}{12}\lambda & \frac{7}{12}\lambda \\ \frac{6}{12}\lambda & \frac{10}{12}\lambda & \frac{10}{12}\lambda \\ \frac{3}{12}\lambda & \frac{7}{12}\lambda & \frac{7}{12}\lambda \end{pmatrix} \qquad \text{Expression (9)}$$

Based on the phase difference $\Delta P$, a ratio of the standard deviation to the average of directivity $|G|^2$ of emitted light is obtained as follows:

$$\frac{\sqrt{\frac{1}{NM}\sum_1^M \sum_1^N (|G|^2 - Ave)^2}}{Ave} = 0$$

Therefore, the condition that the expression (3) is 0.3 or less is satisfied. The result of the diffracted light simulation at this time is shown in Fig. 11(d). Compared with Fig. 9(a), the density of the diffracted light has increased by 12 times, and it can be confirmed that the unevenness of luminance is reduced. Any phase difference may be set not only at N = 3 and M = 4, but also at any value of N and M, if the condition that the expression (3) is 0.3 or less is satisfied.

<Comparative Example 1> 2×2 Array

Let us now consider a 2x2 array as illustrated in Patent Literature 4. In this example, it is said to be preferable that the basic block be a 2×2 array defined by the sum of the respective optical path length differences caused by the periodic phase structure in the x-direction and the periodic phase structure in the y-direction, and the optical path length difference be set to 1/4 times the wavelength. That is, supposing that phase differences for one period of the periodic phase structures in the X-axis direction and the Y-axis' direction be $\Delta P_X$ and $\Delta P_Y$, $\Delta P_X$ and $\Delta P_Y$ are set as follows:

$$\Delta P_N = \begin{pmatrix} 0 & \frac{1}{4}\lambda \end{pmatrix}$$

$$\Delta P_M = \begin{pmatrix} 0 & \dfrac{1}{4}\lambda \end{pmatrix}$$

A phase difference ΔP for one period of a periodic phase structure, in which the X-axis direction and the Y-axis direction are combined, is set by the sum of the phase difference ΔPx in the X-axis direction and the phase difference $\Delta P_Y$ in the Y-axis direction, and therefore is expressed as follows:

$$\Delta P = \begin{pmatrix} 0 & \dfrac{1}{4}\lambda \\ \dfrac{1}{4}\lambda & \dfrac{2}{4}\lambda \end{pmatrix} \qquad \text{Expression (10)}$$

Based on the phase difference ΔP, a ratio of the standard deviation to the average of directivity $|G|^2$ of emitted light is obtained as follows:

$$\frac{\sqrt{\dfrac{1}{NM}\sum_1^M \sum_1^N (|G|^2 - Ave)^2}}{Ave} = 0$$

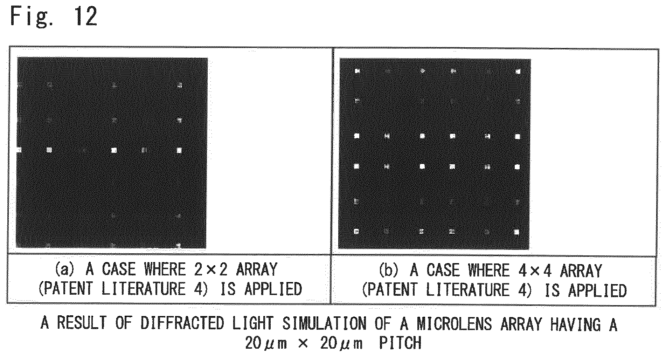

Therefore, this 2x2 array satisfies the condition that the expression (3) is 0.3 or less. A result of diffracted light simulation of a microlens array to which this 2x2 array is applied is shown in Fig. 12(a). Compared with Fig. 9(a), the density of the diffracted light has increased, and thus the unevenness of luminance is reduced. However, even though the level of the phase difference provided is the same as that of Example 1, the density of the diffracted light is smaller than that of Fig. 11(a), so that the effect of reducing the unevenness of luminance is inferior to that of the present invention.

<Comparative Example 2> 4×4 array (Patent Literature 4)

Let us now consider a 4x4 array as illustrated in Patent Literature 4. In this example, it is said to be preferable that the basic block be a 4x4 array defined by the sum of the respective optical path length differences caused by the periodic phase structure in the x-direction and the periodic phase structure in the y-direction, and the optical path length difference be set to 1/2 times the wavelength. That is, if the phase differences for one period of periodic phase structures in the X-axis direction and the Y-axis direction be $\Delta P_X$ and $\Delta P_Y$, $\Delta P_X$ and $\Delta P_Y$ are set as follows:

$$\Delta P_X = \begin{pmatrix} 0 & 0 & \dfrac{1}{2}\lambda & \dfrac{1}{2}\lambda \end{pmatrix}$$

$$\Delta P_Y = \begin{pmatrix} 0 & 0 & \dfrac{1}{2}\lambda & \dfrac{1}{2}\lambda \end{pmatrix}$$

A phase difference ΔP for one period of a periodic phase structure in which the X-axis direction and the Y-axis direction are combined is set by the sum of the phase difference $\Delta P_X$ in the X-axis direction and the phase difference $\Delta P_Y$ in the Y-axis direction, and therefore is expressed as follows:

$$\Delta P = \begin{pmatrix} 0 & 0 & \frac{1}{2}\lambda & \frac{1}{2}\lambda \\ 0 & 0 & \frac{1}{2}\lambda & \frac{1}{2}\lambda \\ \frac{1}{2}\lambda & \frac{1}{2}\lambda & 0 & 0 \\ \frac{1}{2}\lambda & \frac{1}{2}\lambda & 0 & 0 \end{pmatrix} \qquad \text{Expression (11)}$$

Based on the phase difference ΔP, a ratio of the standard deviation to the average of directivity $|G|^2$ of emitted light is obtained as follows:

$$\frac{\sqrt{\frac{1}{NM}\sum_1^M \sum_1^N (|G|^2 - Ave)^2}}{Ave} \cong 1.73$$

Therefore, this 2x2 array does not satisfy the condition that the expression (3) is 0.3 or less. A result of diffracted light simulation of a microlens array to which this 2×2 array is applied is shown in Fig. 12(b). Compared with Fig. 9(a), the density of the diffracted light has increased, and thus the unevenness of luminance is reduced. However, compared with Example 1 of Fig. 11(a), the density of diffracted light is small so that the effect of reducing the unevenness of luminance is inferior to that of the present invention.

This application claims the priority based on Japanese Patent Application No. 2019-011212 filed on January 25, 2019, the entire disclosure of which is incorporated herein by reference.

**Reference Signs List**

10 Basic periodic structure; 11 to 44 Basic periodic structure in n rows and m columns in a basic block; 50 Basic block; 51 Base material; 52 Raised portion; 53 Optical element; 60a to c Basic blocks; 61 Base material; 62a to b Raised portions; 63a First optical element; 63b Second optical element; 71, 72 Optical path length difference; 100 Diffuser plate.

**Claims**

1.  A transmission-type or reflection-type diffuser plate, comprising

    a planar base material on which an X-axis and a Y-axis which are orthogonal to each other are defined in a plane direction, wherein

    an optical element having an effective diameter of "a" in an X-axis direction, and an effective diameter of "b" in a Y-axis direction is provided on one surface of the planar base material; or
    a first optical element having an effective diameter of "a" in the X-axis direction is provided on one surface of the planar base material, and a second optical element having an effective diameter of "b" in the Y-axis direction is provided on the other surface of the planar base material, and an optical element having an effective diameter of "a" in the X-axis direction, and an effective diameter of "b" in the Y-axis direction is formed by combining the first optical element and the second optical element;

an a×b two-dimensional basic periodic structure is constituted by a plurality of the optical elements being disposed in the X-axis direction and the Y-axis direction at intervals respectively based on the effective diameters; each basic periodic structure has a structure that creates an optical path length difference, respectively; the structure that creates the optical path length difference has an NaxMb two-dimensional periodic phase structure in which a basic block has N rows and M columns (at least one of M and N is an integer of 3 or more) including N optical elements in the X-axis direction and M optical elements in the Y-axis direction; and the diffuser plate is configured such that if a phase structure in the n-th row and the m-th column in the basic block is denoted by $P_{nm}$, and if a basic periodic phase difference $\Delta P_X$ in the X-axis direction and a basic periodic phase difference $\Delta P_Y$ in the Y-axis direction are expressed as the following expressions (1) and (2), the Pnm is expressed as $P_{n1} + P_{1m}$; and

$$\Delta P_X = (P_{11} \quad P_{21} \quad ... \quad P_{N1}) \qquad \text{Expression (1)}$$

$$\Delta P_Y = (P_{11} \quad P_{12} \quad ... \quad P_{1M}) \qquad \text{Expression (2)}$$

if complex transmittance or complex reflectance of the optical element in the n-th row and the m-th column in the basic block is denoted by $g(n/\lambda, m/\lambda)$, and directivity is represented by square of the absolute value of Fourier transform $G(\sin\theta_n, \sin\theta_m)$ of complex transmittance or complex reflectance, a ratio of standard deviation to average of the directivity expressed by the following expression (3) is 0.3 or less.

$$\frac{\sqrt{\frac{1}{NM}\sum_1^M \sum_1^N (|G_{N,M}(\sin\theta_n, \sin\theta_m)|^2 - Ave)^2}}{Ave} \qquad \text{Expression (3)}$$

(In the expression (3), Ave is an average value of $|G(\sin\theta_n, \sin\theta_m)|^2$ of each optical element in the basic block.)

2. The diffuser plate according to claim 1, wherein the ratio of the standard deviation to the average of the directivity expressed by the expression (3) is 0.1 or less.

3. The diffuser plate according to claim 1, wherein the ratio of the standard deviation to the average of the directivity expressed by the expression (3) is 0.

4. The diffuser plate according to any one of claims 1 to 3, wherein

the N and M are each independently any of 3, 4, 5, 7, and 8, and when a wavelength of incident light is $\lambda$, a basic periodic phase difference $\Delta P_X$ in the X-axis direction and a basic periodic phase difference $\Delta P_Y$ in the Y-axis direction are independently one of the following $\Delta P_A$.

$$\Delta P_A = \left(0 \quad 0 \quad \frac{1}{3}\lambda\right)$$

$$\Delta P_A = \left(0 \quad 0 \quad 0 \quad \frac{2}{4}\lambda\right)$$

$$\Delta P_A = \begin{pmatrix} 0 & \frac{1}{4}\lambda & 0 & \frac{3}{4}\lambda \end{pmatrix}$$

$$\Delta P_A = \begin{pmatrix} 0 & \frac{1}{4}\lambda & \frac{2}{4}\lambda & \frac{1}{4}\lambda \end{pmatrix}$$

$$\Delta P_A = \begin{pmatrix} 0 & \frac{1}{5}\lambda & \frac{3}{5}\lambda & \frac{1}{5}\lambda & 0 \end{pmatrix}$$

$$\Delta P_A = \begin{pmatrix} 0 & \frac{2}{5}\lambda & \frac{1}{5}\lambda & \frac{2}{5}\lambda & 0 \end{pmatrix}$$

$$\Delta P_A = \begin{pmatrix} 0 & \frac{1}{5}\lambda & 0 & \frac{2}{5}\lambda & \frac{2}{5}\lambda \end{pmatrix}$$

$$\Delta P_A = \begin{pmatrix} 0 & \frac{1}{5}\lambda & \frac{1}{5}\lambda & 0 & \frac{3}{5}\lambda \end{pmatrix}$$

$$\Delta P_A = \begin{pmatrix} 0 & \frac{1}{5}\lambda & \frac{4}{5}\lambda & \frac{4}{5}\lambda & \frac{1}{5}\lambda \end{pmatrix}$$

$$\Delta P_A = \begin{pmatrix} 0 & \frac{2}{5}\lambda & \frac{3}{5}\lambda & \frac{3}{5}\lambda & \frac{2}{5}\lambda \end{pmatrix}$$

$$\Delta P_A = \begin{pmatrix} 0 & \frac{1}{7}\lambda & \frac{3}{7}\lambda & \frac{6}{7}\lambda & \frac{3}{7}\lambda & \frac{1}{7}\lambda & 0 \end{pmatrix}$$

$$\Delta P_A = \begin{pmatrix} 0 & \frac{2}{7}\lambda & \frac{6}{7}\lambda & \frac{5}{7}\lambda & \frac{6}{7}\lambda & \frac{2}{7}\lambda & 0 \end{pmatrix}$$

$$\Delta P_A = \begin{pmatrix} 0 & \frac{3}{7}\lambda & \frac{2}{7}\lambda & \frac{4}{7}\lambda & \frac{2}{7}\lambda & \frac{3}{7}\lambda & 0 \end{pmatrix}$$

$$\Delta P_A = \begin{pmatrix} 0 & \frac{1}{7}\lambda & 0 & \frac{4}{7}\lambda & \frac{6}{7}\lambda & \frac{6}{7}\lambda & \frac{4}{7}\lambda \end{pmatrix}$$

$$\Delta P_A = \begin{pmatrix} 0 & \frac{1}{7}\lambda & \frac{1}{7}\lambda & 0 & \frac{5}{7}\lambda & \frac{2}{7}\lambda & \frac{5}{7}\lambda \end{pmatrix}$$

$$\Delta P_A = \begin{pmatrix} 0 & \frac{1}{7}\lambda & \frac{4}{7}\lambda & \frac{2}{7}\lambda & \frac{2}{7}\lambda & \frac{4}{7}\lambda & \frac{1}{7}\lambda \end{pmatrix}$$

$$\Delta P_A = \begin{pmatrix} 0 & \frac{1}{7}\lambda & \frac{5}{7}\lambda & \frac{5}{7}\lambda & \frac{1}{7}\lambda & 0 & \frac{2}{7}\lambda \end{pmatrix}$$

$$\Delta P_A = \begin{pmatrix} 0 & \frac{1}{7}\lambda & \frac{6}{7}\lambda & \frac{1}{7}\lambda & \frac{0}{7}\lambda & \frac{3}{7}\lambda & \frac{3}{7}\lambda \end{pmatrix}$$

$$\Delta P_A = \begin{pmatrix} 0 & \frac{2}{7}\lambda & \frac{1}{7}\lambda & \frac{4}{7}\lambda & \frac{4}{7}\lambda & \frac{1}{7}\lambda & \frac{2}{7}\lambda \end{pmatrix}$$

$$\Delta P_A = \begin{pmatrix} 0 & \frac{2}{7}\lambda & \frac{2}{7}\lambda & 0 & \frac{3}{7}\lambda & \frac{4}{7}\lambda & \frac{3}{7}\lambda \end{pmatrix}$$

$$\Delta P_A = \begin{pmatrix} 0 & \frac{2}{7}\lambda & \frac{3}{7}\lambda & \frac{3}{7}\lambda & \frac{2}{7}\lambda & 0 & \frac{4}{7}\lambda \end{pmatrix}$$

$$\Delta P_A = \begin{pmatrix} 0 & \frac{3}{7}\lambda & \frac{5}{7}\lambda & \frac{6}{7}\lambda & \frac{6}{7}\lambda & \frac{5}{7}\lambda & \frac{3}{7}\lambda \end{pmatrix}$$

$$\Delta P_A = \begin{pmatrix} 0 & 0 & 0 & \frac{2}{8}\lambda & \frac{4}{8}\lambda & 0 & \frac{4}{8}\lambda & \frac{2}{8}\lambda \end{pmatrix}$$

$$\Delta P_A = \begin{pmatrix} 0 & 0 & \frac{2}{8}\lambda & 0 & 0 & \frac{4}{8}\lambda & \frac{2}{8}\lambda & \frac{4}{8}\lambda \end{pmatrix}$$

$$\Delta P_A = \begin{pmatrix} 0 & \frac{1}{8}\lambda & 0 & \frac{3}{8}\lambda & \frac{4}{8}\lambda & \frac{1}{8}\lambda & \frac{4}{8}\lambda & \frac{3}{8}\lambda \end{pmatrix}$$

$$\Delta P_A = \begin{pmatrix} 0 & \frac{1}{8}\lambda & 0 & \frac{7}{8}\lambda & \frac{4}{8}\lambda & \frac{1}{8}\lambda & \frac{4}{8}\lambda & \frac{7}{8}\lambda \end{pmatrix}$$

$$\Delta P_A = \begin{pmatrix} 0 & \frac{1}{8}\lambda & \frac{2}{8}\lambda & \frac{1}{8}\lambda & 0 & \frac{5}{8}\lambda & \frac{2}{8}\lambda & \frac{5}{8}\lambda \end{pmatrix}$$

$$\Delta P_A = \begin{pmatrix} 0 & \frac{1}{8}\lambda & \frac{2}{8}\lambda & \frac{5}{8}\lambda & 0 & \frac{5}{8}\lambda & \frac{2}{8}\lambda & \frac{1}{8}\lambda \end{pmatrix}$$

$$\Delta P_A = \begin{pmatrix} 0 & \frac{1}{8}\lambda & \frac{4}{8}\lambda & \frac{3}{8}\lambda & \frac{4}{8}\lambda & \frac{1}{8}\lambda & 0 & \frac{3}{8}\lambda \end{pmatrix}$$

$$\Delta P_A = \begin{pmatrix} 0 & \frac{1}{8}\lambda & \frac{4}{8}\lambda & \frac{7}{8}\lambda & \frac{4}{8}\lambda & \frac{1}{8}\lambda & 0 & \frac{7}{8}\lambda \end{pmatrix}$$

$$\Delta P_A = \begin{pmatrix} 0 & \frac{1}{8}\lambda & \frac{6}{8}\lambda & \frac{1}{8}\lambda & 0 & \frac{5}{8}\lambda & \frac{6}{8}\lambda & \frac{5}{8}\lambda \end{pmatrix}$$

$$\Delta P_A = \begin{pmatrix} 0 & \frac{1}{8}\lambda & \frac{6}{8}\lambda & \frac{5}{8}\lambda & 0 & \frac{5}{8}\lambda & \frac{6}{8}\lambda & \frac{1}{8}\lambda \end{pmatrix}$$

$$\Delta P_A = \begin{pmatrix} 0 & \frac{2}{8}\lambda & 0 & \frac{4}{8}\lambda & \frac{4}{8}\lambda & \frac{2}{8}\lambda & \frac{4}{8}\lambda & \frac{4}{8}\lambda \end{pmatrix}$$

$$\Delta P_A = \begin{pmatrix} 0 & \frac{2}{8}\lambda & \frac{2}{8}\lambda & \frac{2}{8}\lambda & 0 & \frac{6}{8}\lambda & \frac{2}{8}\lambda & \frac{6}{8}\lambda \end{pmatrix}$$

$$\Delta P_A = \begin{pmatrix} 0 & \frac{2}{8}\lambda & \frac{2}{8}\lambda & \frac{6}{8}\lambda & 0 & \frac{6}{8}\lambda & \frac{2}{8}\lambda & \frac{2}{8}\lambda \end{pmatrix}$$

$$\Delta P_A = \begin{pmatrix} 0 & \frac{2}{8}\lambda & \frac{4}{8}\lambda & \frac{4}{8}\lambda & \frac{4}{8}\lambda & \frac{2}{8}\lambda & 0 & \frac{4}{8}\lambda \end{pmatrix}$$

$$\Delta P_A = \begin{pmatrix} 0 & \frac{3}{8}\lambda & 0 & \frac{5}{8}\lambda & \frac{4}{8}\lambda & \frac{3}{8}\lambda & \frac{4}{8}\lambda & \frac{5}{8}\lambda \end{pmatrix}$$

$$\Delta P_A = \begin{pmatrix} 0 & \frac{3}{8}\lambda & \frac{2}{8}\lambda & \frac{3}{8}\lambda & 0 & \frac{7}{8}\lambda & \frac{2}{8}\lambda & \frac{7}{8}\lambda \end{pmatrix}$$

5. The diffuser plate according to claim 4, wherein the $\lambda$ is 630 nm.

6. The diffuser plate according to claim 4, wherein the $\lambda$ is 530 nm.

7. The diffuser plate according to claim 4, wherein the $\lambda$ is 580 nm.

Fig. 1

Fig. 2

Fig. 3

60a

| 11 | 21 | 31 | 41 |
| 12 | 22 | 32 | 42 |
| 13 | 23 | 33 | 43 |
| 14 | 24 | 34 | 44 |

4B'

b

4A ----- 4A'

4B'

a

60c

60b

Fig. 4

Fig. 5

60c

63a
62a
61
62b
63b

4B

4B'

T

34 33 32 31

Z
Y — X

Fig. 6

Fig. 7

Fig. 8

Fig. 9

| (a) A CASE WHERE NO PERIODIC PHASE STRUCTURE IS APPLIED | (b) A CASE WHERE A PERIODIC PHASE STRUCTURE OF EXPRESSION (5) IS APPLIED |
|---|---|

DIFFRACTED LIGHT SIMULATION OF A MICROLENS ARRAY HAVING A
20$\mu$m × 20$\mu$m PITCH

Fig. 10

| (a) A CASE WHERE NO PERIODIC PHASE STRUCTURE IS APPLIED | (b) A CASE WHERE A PERIODIC PHASE STRUCTURE OF EXPRESSION (5) IS APPLIED |
|---|---|

A RESULT OF DIFFRACTED LIGHT EXPERIMENT OF A MICROLENS ARRAY HAVING A
40$\mu$m × 40$\mu$m PITCH

Fig. 11

| (a) A CASE WHERE A PERIODIC PHASE STRUCTURE OF EXPRESSION (6) IS APPLIED | (b) A CASE WHERE A PERIODIC PHASE STRUCTURE OF EXPRESSION (7) IS APPLIED |
| --- | --- |
| (c) A CASE WHERE A PERIODIC PHASE STRUCTURE OF EXPRESSION (8) IS APPLIED | (d) A CASE WHERE A PERIODIC PHASE STRUCTURE OF EXPRESSION (9) IS APPLIED |

A RESULT OF DIFFRACTED LIGHT SIMULATION OF A MICROLENS ARRAY HAVING A
20μm × 20μm PITCH

Fig. 12

| (a) A CASE WHERE 2×2 ARRAY (PATENT LITERATURE 4) IS APPLIED | (b) A CASE WHERE 4×4 ARRAY (PATENT LITERATURE 4) IS APPLIED |
|---|---|

A RESULT OF DIFFRACTED LIGHT SIMULATION OF A MICROLENS ARRAY HAVING A 20μm × 20μm PITCH

<div align="center">

**INTERNATIONAL SEARCH REPORT**

</div>

| International application No. |
| --- |
| PCT/JP2020/001825 |

**A. CLASSIFICATION OF SUBJECT MATTER**
Int.Cl. G02B5/02(2006.01)i, G02B3/00(2006.01)i, G02B27/01(2006.01)i,
G02B27/48(2006.01)i, G03B21/62(2014.01)i
FI: G02B5/02C, G02B3/00A, G03B21/62, G02B27/01, G02B27/48
According to International Patent Classification (IPC) or to both national classification and IPC

**B. FIELDS SEARCHED**

Minimum documentation searched (classification system followed by classification symbols)
Int.Cl. G02B5/02, G02B3/00, G02B27/01, G02B27/48, G03B21/62

Documentation searched other than minimum documentation to the extent that such documents are included in the fields searched
Published examined utility model applications of Japan     1922–1996
Published unexamined utility model applications of Japan     1971–2020
Registered utility model specifications of Japan     1996–2020
Published registered utility model applications of Japan     1994–2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2017-122773 A (PIONEER CORPORATION) 13.07.2017 (2017-07-13), entire text, all drawings | 1-7 |
| A | WO 2016/139769 A1 (PIONEER CORPORATION) 09.09.2016 (2016-09-09), entire text, all drawings | 1-7 |
| A | JP 4-119339 A (NIKON CORPORATION) 20.04.1992 (1992-04-20), entire text, all drawings | 1-7 |
| A | WO 2016/051766 A1 (KURARAY CO., LTD.) 07.04.2016 (2016-04-07), entire text, all drawings | 1-7 |
| A | WO 2016/143350 A1 (KURARAY CO., LTD.) 15.09.2016 (2016-09-15), entire text, all drawings | 1-7 |
| A | JP 2015-34877 A (DENSO CORPORATION) 19.02.2015 (2015-02-19), entire text, all drawings | 1-7 |
| P, A | WO 2019/163678 A1 (KURARAY CO., LTD.) 29.08.2019 (2019-08-29), entire text, all drawings | 1-7 |

☐ Further documents are listed in the continuation of Box C.     ☒ See patent family annex.

| | |
| --- | --- |
| *     Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>17.03.2020 | Date of mailing of the international search report<br>31.03.2020 |
| --- | --- |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

| INTERNATIONAL SEARCH REPORT | International application No. |
|---|---|
| Information on patent family members | PCT/JP2020/001825 |

```
JP 2017-122773 A    13.07.2017    (Family: none)

WO 2016/139769 A1  09.09.2016    US 2018/0031830 A1
                                 entire text, all drawings

JP 4-119339 A       20.04.1992    US 5177637 A
                                 entire text, all drawings
                                 EP 475741 A2

WO 2016/051766 A1  07.04.2016    US 2017/0235028 A1
                                 entire text, all drawings
                                 EP 3203275 A1
                                 CN 106796311 A
                                 KR 10-2017-0063665 A
                                 TW 201619663 A

WO 2016/143350 A1  15.09.2016    US 2018/0106930 A1
                                 entire text, all drawings
                                 EP 3270193 A1
                                 KR 10-2017-0125955 A
                                 CN 107430219 A
                                 TW 201636646 A

JP 2015-34877 A     19.02.2015    US 2015/0042542 A1
                                 entire text, all drawings
                                 DE 102014215453 A1
                                 CN 104345458 A
                                 KR 10-2015-0018445 A

WO 2019/163678 A1  29.08.2019    (Family: none)
```

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010145745 A
- JP 2004505306 W
- JP 2016139769 A
- JP 2017122773 A
- JP 2019011212 A